# EUROPÄISCHE PATENTSCHRIFT

(11) **EP 3 166 997 B1**
(45) Veröffentlichungstag und Bekanntmachung des Hinweises auf die Patenterteilung: **20.03.2019**
(21) Anmeldenummer: 15734380.7
(22) Anmeldetag: 07.07.2015
(51) Int. Cl.: C08K 5/11, C08K 5/12

(54) **WEICHMACHER-ZUSAMMENSETZUNG, DIE ALIPHATISCHE DICARBONSÄUREESTER UND TEREPHTHALSÄUREDIALKYLESTER ENTHÄLT**
PLASTICIZER COMPOSITION WHICH COMPRISE ALIPHATIC ESTER OF DICARBOXYLIC ACID AND ALKYLESTER OF ACID TEREPHTHALIC
COMPOSITION DE PLASTIFIANTS COMPRENANT DES ESTERS ALIPHATIQUES D'ACIDE DICARBOXYLIQUE ET DES ALKYLESTERS D'ACIDE TÉRÉPHTALIQUE

(30) Priorität: 08.07.2014 EP 14176144; 30.01.2015 EP 15153263
(43) Veröffentlichungstag der Anmeldung: 17.05.2017
(73) Patentinhaber: BASF SE, 67056 Ludwigshafen am Rhein (DE)
(72) Erfinder: PFEIFFER, Matthias, 67459 Böhl-Iggelheim (DE); BREITSCHEIDEL, Boris, 67165 Waldsee (DE); GRIMM, Axel, 67480 Edenkoben (DE); MORGENSTERN, Herbert, 67158 Ellerstadt (DE)
(74) Vertreter: BASF IP Association
(86) Internationale Anmeldenummer: PCT/EP2015/065421
(87) Internationale Veröffentlichungsnummer: WO 2016/005357

(56) Entgegenhaltungen:
- WO-A1-2012/069278
- DE-T2- 60 221 398
- US-A1- 2003 014 948
- US-A1- 2007 037 926
- US-A1- 2010 108 235
- US-B1- 6 437 170
- DATABASE WPI Week 200660 Thomson Scientific, London, GB; AN 2006-582762 XP002743636, & JP 2006 219684 A (MITSUBISHI PLASTICS IND LTD) 24. August 2006 (2006-08-24)
- DATABASE WPI Week 201377 Thomson Scientific, London, GB; AN 2013-P23115 XP002743637, & CN 103 012 944 A (NINGBO JULONG RUBBER PLASTIC&ELECTROME) 3. April 2013 (2013-04-03)

## Beschreibung

### HINTERGRUND DER ERFINDUNG

Die vorliegende Erfindung betrifft eine Weichmacher-Zusammensetzung, die wenigstens einen aliphatischen Dicarbonsäureester und wenigstens einen Terephthalsäuredialkylester enthält, Formmassen, die ein thermoplastisches Polymer oder ein Elastomer und eine solche Weichmacher-Zusammensetzung enthalten und die Verwendung dieser Weichmacher-Zusammensetzungen und Formmassen.

### STAND DER TECHNIK

Zur Erzielung gewünschter Verarbeitungs- bzw. Anwendungseigenschaften werden einer Vielzahl von Kunststoffen so genannte Weichmacher zugesetzt, um diese weicher, flexibler und/oder dehnbarer zu machen. Im Allgemeinen dient der Einsatz von Weichmachern dazu, den thermoplastischen Bereich von Kunststoffen zu niedrigeren Temperaturen hin zu verschieben, um im Bereich niedriger Verarbeitungs- und Einsatztemperaturen die gewünschten elastischen Eigenschaften zu erhalten.

Polyvinylchlorid (PVC) gehört zu den mengenmäßig meist hergestellten Kunststoffen. Aufgrund seiner vielseitigen Anwendbarkeit findet es sich heutzutage in einer Vielzahl von Produkten des täglichen Lebens. PVC wird daher eine sehr große wirtschaftliche Bedeutung zugemessen. PVC ist ursprünglich ein bis ca. 80 °C harter und spröder Kunststoff, der durch Zugabe von Thermostabilisatoren und anderen Zuschlagstoffen als Hart-PVC (PVC-U) eingesetzt wird. Erst durch die Zugabe geeigneter Weichmacher gelangt man zu Weich-PVC (PVC-P), das für viele Anwendungszwecke verwendet werden kann, für die Hart-PVC ungeeignet ist.

Weitere wichtige thermoplastische Polymere in denen üblicherweise Weichmacher Anwendung finden sind z. B. Polyvinylbutyral (PVB), Homo- und Copolymere von Styrol, Polyacrylate, Polysulfide oder thermoplastische Polyurethane (PU).

Ob sich eine Substanz zur Anwendung als Weichmacher für ein bestimmtes Polymer eignet, hängt weitgehend von den Eigenschaften des weichzumachenden Polymers ab. Erwünscht sind in der Regel Weichmacher, die eine hohe Verträglichkeit mit dem weichzumachenden Polymer aufweisen, d. h. diesem gute thermoplastische Eigenschaften verleihen und nur eine geringe Neigung zum Abdampfen und/oder Ausschwitzen (hohe Permanenz) besitzen.

Auf dem Markt ist eine Vielzahl verschiedener Verbindungen zur Weichmachung von PVC und weiteren Kunststoffen erhältlich. Aufgrund ihrer guten Verträglichkeit mit dem PVC und ihrer vorteilhaften anwendungstechnischen Eigenschaften wurden in der Vergangenheit vielfach Phthalsäurediester mit Alkoholen unterschiedlicher chemischer Struktur als Weichmacher eingesetzt, wie z. B. Diethylhexylphthalat (DEHP), Diisononylphthalat (DINP) und Diisodecylphthalat (DIDP). Kurzkettige Phthalate, wie beispielsweise Dibutylphthalat (DBP), Diisobutylphthalat (DIBP), Benzylbutylphthalat (BBP) oder Diisoheptylphthalat (DIHP), werden auch als Schnellgelierer ("fast fuser") eingesetzt, z. B. bei der Herstellung von so genannten Plastisolen. Neben den kurzkettigen Phthalaten können auch Dibenzoesäureester wie Dipropylenglycoldibenzoate zum gleichen Zwecke eingesetzt werden. Eine weitere Klasse von Weichmachern mit guten Geliereigenschaften, sind beispielsweise die Phenyl- und Cresylester von Alkylsulfonsäuren, die unter dem Markennamen Mesamoll® erhältlich sind.

Bei Plastisolen handelt es sich zunächst um eine Suspension von feinpulvrigen Kunststoffen in flüssigen Weichmachern. Dabei ist die Lösungsgeschwindigkeit des Polymers in dem Weichmacher bei Umgebungstemperatur sehr gering. Erst beim Erwärmen auf höhere Temperaturen löst sich das Polymer merklich im Weichmacher. Dabei quellen und fusionieren die einzelnen isolierten Kunststoffaggregate zu einem dreidimensionalen hochviskosen Gel. Dieser Vorgang wird als Gelieren bezeichnet und findet ab einer gewissen Mindesttemperatur statt, die als Gelier- oder Lösetemperatur bezeichnet wird. Der Schritt der Gelierung ist nicht reversibel.

Da Plastisole in flüssiger Form vorliegen, werden diese sehr häufig zum Beschichten von verschiedensten Materialien, wie z. B. Textilien, Glasvliesen etc., eingesetzt. Dabei wird die Beschichtung sehr häufig aus mehreren Lagen aufgebaut.

In der Praxis wird bei der Verarbeitung von Plastisolprodukten deshalb oftmals so vorgegangen, dass eine Schicht Plastisol aufgebracht wird und direkt im Anschluss der Kunststoff, insbesondere PVC, mit dem Weichmacher oberhalb der Lösetemperatur angeliert wird, also eine feste Schicht, bestehend aus einer Mischung aus gelierten, teilweise gelierten und nicht-gelierten Kunststoffpartikeln entsteht. Auf diese angelierte Schicht wird dann die nächste Lage aufgebracht und nach Aufbringen der letzten Schicht der Gesamtaufbau durch Erwärmen auf höhere Temperaturen komplett zum vollständig gelierten Kunststoffprodukt verarbeitet.

Neben Plastisolen können auch trockene pulverförmige Mischungen aus Weichmacher und Kunststoffen hergestellt werden. Solche Dry-Blends, insbesondere auf Basis PVC, können dann bei erhöhten Temperaturen, z. B. durch Extrusion, zu einem Granulat weiterverarbeitet oder durch herkömmliche Formgebungsverfahren, wie Spritzgießen, Extrudieren oder Kalandrieren, zum vollständig gelierten Kunststoffprodukt verarbeitet werden.

Aufgrund steigender technischer und wirtschaftlicher Anforderungen an die Verarbeitung thermoplastischer Polymere und Elastomere, sind zudem Weichmacher erwünscht, die gute Geliereigenschaften besitzen.

Insbesondere bei der Herstellung und Verarbeitung von PVC-Plastisolen, beispielsweise zur Herstellung von PVC-Beschichtungen, ist es unter anderem wünschenswert, einen Weichmacher mit niedriger Geliertemperatur als Schnellgelierer ("fast fuser") zur Verfügung zu haben. Darüber hinaus ist auch eine hohe Lagerstabilität des Plastisols gewünscht, d. h. das nicht-gelierte Plastisol soll bei Umgebungstemperatur keinen oder nur einen geringen Viskositätsanstieg mit der Zeit aufweisen. Diese Eigenschaften sollen möglichst durch Zugabe eines geeigneten Weichmachers mit Schnellgeliereigenschaften erzielt werden, wobei sich der Einsatz von weiteren viskositätsverringernden Additiven und/oder von Lösungsmitteln erübrigen soll.

Allerdings weisen Schnellgelierer in der Regel oft eine verbesserungswürdige Verträglichkeit mit den additivierten Polymeren und eine ebenfalls noch verbesserungswürdige Permanenz auf. Außerdem zeigen sie meistens eine hohe Flüchtigkeit sowohl bei der Verarbeitung als auch während des Gebrauchs der Endprodukte. Zudem wirkt sich der Zusatz von Schnellgelierern in vielen Fällen nachteilig auf die mechanischen Eigenschaften der Endprodukte aus. Zum Einstellen der gewünschten Weichmacher-Eigenschaften ist daher auch bekannt, Mischungen von Weichmachern einzusetzen, z. B. wenigstens einen Weichmacher, der gute thermoplastische Eigenschaften verleiht, aber weniger gut geliert, in Kombination mit wenigstens einem Schnellgelierer.

Des Weiteren besteht der Bedarf, zumindest einige der eingangs erwähnten Phthalat-Weichmacher zu ersetzen, da diese im Verdacht stehen, gesundheitsschädlich zu sein. Dies gilt speziell für sensible Anwendungsbereiche wie Kinderspielzeug, Lebensmittelverpackungen oder medizinische Artikel.

Im Stand der Technik sind verschiedene alternative Weichmacher mit unterschiedlichen Eigenschaften für diverse Kunststoffe und speziell für PVC bekannt.

Eine aus dem Stand der Technik bekannte Weichmacherklasse, die als Alternative zu Phthalaten eingesetzt werden kann, basiert auf Cyclohexanpolycarbonsäuren, wie sie in der WO 99/32427 beschrieben sind. Im Gegensatz zu ihren unhydrierten aromatischen Analoga sind diese Verbindungen toxikologisch unbedenklich und können auch in sensiblen Anwendungsbereichen eingesetzt werden.

Die WO 00/78704 beschreibt ausgewählte Dialkylcyclohexan-1,3- und 1,4-dicarbonsäureester für die Verwendung als Weichmacher in synthetischen Materialien.

Die US 7,973,194 B1 lehrt die Verwendung von Dibenzylcyclohexan-1,4-dicarboxylat, Benzylbutylcyclohexan-1,4-dicarboxylat und Dibutylcyclohexan-1,4-dicarboxylat als schnellgelierende Weichmacher für PVC.

Zum Einstellen der gewünschten Weichmacher-Eigenschaften ist auch bekannt, Mischungen von Weichmachern einzusetzen, z. B. wenigstens einen Weichmacher, der gute thermoplastische Eigenschaften verleiht, aber weniger gut geliert, in Kombination mit wenigstens einem Weichmacher, der gute Geliereigenschaften verleiht.

Die WO 03/029339 offenbart PVC-Zusammensetzungen enthaltend Cyclohexanpolycarbonsäureester sowie Mischungen aus Cyclohexanpolycarbonsäureester mit anderen Weichmachern. Als geeignete andere Weichmacher werden Ester-Weichmacher, wie Terephthalsäureester, Phthalsäureester, Isophthalsäureester und Adipinsäureester genannt. Des Weiteren werden PVC-Zusammensetzungen offenbart enthaltend Mischungen von Cyclohexanpolycarbonsäureestern mit verschiedenen schnellgelierenden Weichmachern. Als geeignete schnellgelierende Weichmacher werden insbesondere verschiedene Benzoate, aromatische Sulfonsäureester, Citrate sowie Phosphate genannt. Beiläufig werden auch kurzkettige Dicarbonsäureester, wie Di-n-butyladipat, als geeignete schnellgelierende Weichmacher genannt.

Eine weitere aus dem Stand der Technik bekannte Weichmacherklasse, die als Alternative zu Phthalaten eingesetzt werden kann, sind Ester der Terephthalsäure, wie sie beispielsweise in der WO 2009/095126 beschrieben sind.

Die EP 1354867 beschreibt isomere Benzoesäureisononylester, deren Gemische mit Phthalsäurealkylestern, Adipinsäurealkylestern oder Cyclohexandicarbonsäurealkylestern sowie ein Verfahren zu deren Herstellung. Weiterhin beschreibt die EP 1354867 die Verwendung der genannten Gemische als Weichmacher in Kunststoffen, insbesondere in PVC und PVC-Plastisolen. Um eine für Plastisolanwendungen ausreichend niedrige Geliertemperatur zu erreichen, müssen große Mengen dieser Benzoesäureisononylester eingesetzt werden. Zudem zeigen diese Weichmacher eine hohe Flüchtigkeit und deren Zusatz wirkt sich negativ auf die mechanischen Eigenschaften der Endprodukte aus.

Die EP 1415978 beschreibt isomerer Benzoesäuredodecylester, deren Gemische mit Phthalsäurealkylestern, Adipinsäurealkylestern oder Cyclohexandicarbonsäurealkylestern sowie die Verwendung dieser Gemische als Weichmacher für Polymere, insbesondere als Weichmacher für PVC und PVC-Plastisole. Um eine für Plastisolanwendungen ausreichend niedrige Geliertemperatur zu erreichen, müssen auch hier große Mengen dieser Benzoesäureisodecylester eingesetzt werden. Zudem zeigen diese Weichmacher ebenfalls eine hohe Flüchtigkeit und deren Zusatz wirkt sich negativ auf die mechanischen Eigenschaften der Endprodukte aus.

Der vorliegenden Erfindung liegt die Aufgabe zugrunde, eine Weichmacher-Zusammensetzung für thermoplastische Polymere und Elastomere zur Verfügung zu stellen, die einerseits gute thermoplastische und mechanische Eigenschaften und andererseits gute Geliereigenschaften, d. h. eine niedrige Geliertemperatur, verleiht. Die Weichmacher-Zusammensetzung soll sich dadurch insbesondere zur Bereitstellung von Plastisolen eignen. Die Weichmacher-Zusammensetzung soll eine hohe Verträglichkeit mit dem weichzumachenden Polymer aufweisen, eine hohe Permanenz besitzen und zudem toxikologisch unbedenklich sein. Außerdem soll die Weichmacher-Zusammensetzung eine geringe Flüchtigkeit sowohl bei der Verarbeitung als auch während des Gebrauchs der Endprodukte zeigen, d.h. nicht oder nur zu einem geringen Umfang zum Ausschwitzen oder Abdampfen neigen. Die so weichgemachten Polymere sollen damit ihre elastischen Eigenschaften über einen langen Zeitraum beibehalten.

Diese Aufgabe wird überaschenderweise gelöst durch eine Weichmacher-Zusammensetzung, enthaltend
a) wenigstens eine Verbindung der allgemeinen Formel (I),

   R¹-O-C(=O)-X-C(=O)-O-R² (I)

   worin
   X für eine unverzweigte oder verzweigte C₂-C₈-Alkylengruppe oder eine unverzweigte oder verzweigte C₂-C₈-Alkenylengruppe, enthaltend wenigstens eine Doppelbindung, steht
      und
   R¹ und R² unabhängig voneinander ausgewählt sind unter C₃-C₅-Alkyl,
b) wenigstens eine Verbindung der allgemeinen Formel (II), 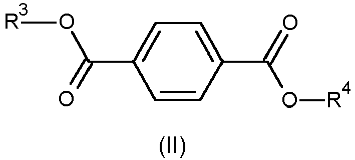 worin
   R³ und R⁴ unabhängig voneinander ausgewählt sind unter verzweigten und unverzweigten C₄-C₁₂-Alkylresten.

Ein weiterer Gegenstand der Erfindung sind Formmassen, die wenigstens ein thermoplastisches Polymer oder Elastomer und eine Weichmacher-Zusammensetzung, wie zuvor und im Folgenden definiert, enthalten.

Ein weiterer Gegenstand der Erfindung ist die Verwendung einer Weichmacher-Zusammensetzung, wie zuvor und im Folgenden definiert, als Weichmacher für thermoplastische Polymere, insbesondere Polyvinylchlorid (PVC), und Elastomere.

Ein weiterer Gegenstand der Erfindung ist die Verwendung einer Weichmacher-Zusammensetzung, wie zuvor und im Folgenden definiert, als Weichmacher in Plastisolen.

Ein weiterer Gegenstand der Erfindung ist die Verwendung dieser Formmassen zur Herstellung von Formkörpern und Folien.

### BESCHREIBUNG DER ERFINDUNG

Die erfindungsgemäßen Weichmacher-Zusammensetzungen weisen wenigstens einen der folgenden Vorteile auf:
- Die erfindungsgemäßen Weichmacher-Zusammensetzungen zeichnen sich durch eine hohe Verträglichkeit mit den weichzumachenden Polymeren, insbesondere PVC, aus.
   Die erfindungsgemäßen Weichmacher-Zusammensetzungen besitzen eine hohe Permanenz, d.h. sie neigen nicht oder nur zu einem geringen Umfang zum Ausschwitzen oder Abdampfen, sowohl bei der Verarbeitung als auch während des Gebrauchs der Endprodukte. Trotzdem verleihen diese dem weichzumachenden Polymer gute Geliereigenschaften.
- Die erfindungsgemäßen Weichmacher-Zusammensetzungen eignen sich in vorteilhafter Weise zur Erzielung einer Vielzahl unterschiedlichster und komplexer Verarbeitungs- und Anwendungseigenschaften von Kunststoffen.
- Die erfindungsgemäße Weichmacher-Zusammensetzung eignet sich in vorteilhafter Weise zur Herstellung von Plastisolen.
- Die in der erfindungsgemäßen Weichmacher-Zusammensetzung enthaltenen Verbindungen (I) eignen sich aufgrund ihrer äußerst niedrigen Lösetemperaturen nach DIN 53408 sehr gut als Schnellgelierer. Um die zum Gelieren eines thermoplastischen Polymers erforderliche Temperatur zu verringern und/oder dessen Geliergeschwindigkeit zu erhöhen, reichen bereits geringe Mengen der Verbindungen (I) in der erfindungsgemäßen Weichmacher-Zusammensetzung aus.
- Die erfindungsgemäßen Weichmacher-Zusammensetzungen eignen sich für die Verwendung zur Herstellung von Formkörpern und Folien für sensible Anwendungsbereiche, wie Medizinprodukte, Lebensmittelverpackungen, Produkte für den Innenraumbereich, beispielsweise von Wohnungen und Fahrzeugen, Spielzeuge, Kinderpflegeartikel, etc.
- Zur Herstellung der in den erfindungsgemäßen Weichmacher-Zusammensetzungen enthaltenen Verbindungen (I) können leicht zugängliche Edukte verwendet werden.
- Die Verfahren zur Herstellung der erfindungsgemäß eingesetzten Verbindungen (I) sind einfach und effizient, wodurch diese problemlos in großtechnischem Maßstab bereitgestellt werden können.

Wie zuvor erwähnt wurde überraschenderweise festgestellt, dass die in den erfindungsgemäß eingesetzten Weichmacher-Zusammensetzungen enthaltenen Verbindungen der allgemeinen Formel (I) sehr niedrige Lösetemperaturen nach DIN 53408 aufweisen und sich diese dadurch speziell in Kombination mit Terephthalsäuredialkylestern der allgemeinen Formel (II) zur Verbesserung des Gelierverhaltens von thermoplastischen Polymeren und Elastomeren eignen. Dabei sind bereits relativ geringe Mengen der Verbindungen (I) in der erfindungsgemäßen Weichmacher-Zusammensetzung ausreichend, um die zum Gelieren erforderliche Temperatur zu verringern und/oder die Geliergeschwindigkeit zu erhöhen.

Im Rahmen der vorliegenden Erfindung wird unter einem Schnellgelierer bzw. "fast fuser" ein Weichmacher verstanden, der eine Lösetemperatur nach DIN 53408 von unter 120 °C aufweist. Solche Schnellgelierer werden insbesondere zur Herstellung von Plastisolen verwendet.

Im Rahmen der vorliegenden Erfindung steht die zuvor oder im Folgenden verwendete Abkürzung phr (parts per hundred resin) für Gewichtsteile pro hundert Gewichtsteile Polymer.

Die Reste R¹ und R² in der allgemeinen Formel (I) stehen unabhängig voneinander für C₃- bis C₅-Alkyl. Im Rahmen der vorliegenden Erfindung umfasst der Ausdruck "C₃- bis C₅-Alkyl" geradkettige oder verzweigte C₃- bis C₅-Alkylgruppen. Dazu zählen n-Propyl, Isopropyl, n-Butyl, Isobutyl, sec.-Butyl, tert.-Butyl, n-Pentyl, 2-Pentyl, 2-Methylbutyl, 3-Methylbutyl, 1,2-Dimethylpropyl, 1,1-Dimethylpropyl, 2,2-Dimethylpropyl und 1-Ethylpropyl. Bevorzugt stehen die Reste R¹ und R² in der allgemeinen Formel (I) unabhängig voneinander für n-Butyl, Isobutyl, n-Pentyl, 2-Methylbutyl oder 3-Methylbutyl. Ganz besonders bevorzugt stehen die Reste R¹ und R² in der allgemeinen Formel (I) beide für n-Butyl.

Im Rahmen der vorliegenden Erfindung bezieht sich der Ausdruck "C₂-C₈-Alkylengruppe" auf zweiwertige Kohlenwasserstoffreste mit 2 bis 8 Kohlenstoffatomen. Die zweiwertigen Kohlenwasserstoffreste können unverzweigt oder verzweigt sein. Dazu zählen beispielsweise 1,2-Ethylen, 1,2-Propylen, 1,3-Propylen, 1,3-Butylen, 1,4-Butylen, 2-Methyl-1,3-propylen, 1,1-Dimethyl-1,2-ethylen, 1,4-Pentylen, 1,5-Pentylen, 2-Methyl-1,4-butylen, 2,2-Dimethyl-1,3-propylen, 1,6-Hexylen, 2-Methyl-1,5-pentylen, 3-Methyl-1,5-pentylen, 2,3-Dimethyl-1,4-butylen, 1,7-Heptylen, 2-Methyl-1,6-hexylen, 3-Methyl-1,6-hexylene, 2-Ethyl-1,5-pentylen, 3-Ethyl-1,5-pentylen, 2,3-Dimethyl-1,5-pentylen, 2,4-Dimethyl-1,5-pentylen, 1,8-Octylen, 2-Methyl-1,7-heptylen, 3-Methyl-1,7-heptylen, 4-Methyl-1,7-heptylen, 2-Ethyl-1,6-hexylen, 3-Ethyl-1,6-hexylen, 2,3-Dimethyl-1,6-hexylen, 2,4-Dimethyl-1,6-hexylen und dergleichen. Bevorzugt handelt es sich bei der C₂-C₈-Alkylengruppe um unverzweigte C₂-C₅-Alkylengruppen, insbesondere um 1,3-Propylen und 1,4-Butylen.

Im Rahmen der vorliegenden Erfindung handelt es sich bei der "C₂-C₈-Alkenylengruppe" um zweiwertige Kohlenwasserstoffreste mit 2 bis 8 Kohlenstoffatomen, welche unverzweigt oder verzweigt sein können, wobei die Hauptkette wenigstens eine Doppelbindung aufweist. Bevorzugt handelt es sich bei der "C₂-C₈-Alkenylengruppe" um verzweigte und unverzweigte C₂-C₆-Alkenylengruppen mit einer Doppelbindungen. Dazu zählen beispielsweise Ethenylen, Propenylen, 1-Methylethenylen, 1-, 2-Butenylen, 1-Methylpropenylen, 2-Methylpropenylen, 1-, 2-, Pentenylen, 1-Methyl-1-butenylen, 1-Methyl-2-butenylen, 1-, 2-, 3-Hexenylen, 1-Methyl-1-pentenylen, 1-Methyl-2-pentenylen, 1-Methyl-3-pentenylen, 1,4-Dimethyl-1-butenylen, 1,4-Dimethyl-2-butenylen und dergleichen. Besonders bevorzugt handelt es sich bei der "C₂-C₈-Alkenylengruppe" um unverzweigte C₂-C₄-Alkenylengruppen mit einer Doppelbindung.

Die Doppelbindungen in den C₂-C₈-Alkenylengruppen können unabhängig voneinander sowohl in der E- als auch in Z-Konfiguration oder als Mischung beider Konfigurationen vorliegen.

Bei den einfach oder mehrfach verzweigten C₂-C₈-Alkylengruppen und C₂-C₈-Alkenylengruppen, kann das Kohlenstoffatom am Verzweigungspunkt oder die Kohlenstoffatome an den jeweiligen Verzweigungspunkten, unabhängig voneinander eine R-, oder eine S-Konfiguration oder beide Konfigurationen zu gleichen oder unterschiedlichen Anteilen aufweisen.

Vorzugsweise steht X in den Verbindungen der allgemeinen Formel (I) für eine unverzweigte C₂-C₅-Alkylengruppe oder eine unverzweigte C₂-C₄-Alkenylengruppe mit einer Doppelbindung.

Besonders bevorzugt steht X in den Verbindungen der allgemeinen Formel (I) für eine unverzweigte C₂-C₅-Alkylengruppe, insbesondere für 1,3-Propylen und 1,4-Butylen.

Bevorzugte Verbindungen der allgemeinen Formel (I) sind ausgewählt unter
Di-(n-butyl)-glutarat,
Di-isobutyl-glutarat,
Di-(n-pentyl)-glutarat,
Di-(2-methylbutyl)-glutarat,
Di-(3-methylbutyl)-glutarat,
Di-(n-butyl)-adipat,
Di-isobutyl-adipat,
Di-(n-pentyl)-adipat,
Di-(2-methylbutyl)-adipat,
Di-(3-methylbutyl)-adipat
sowie Mischungen aus zwei oder mehr als zwei der zuvor genannten Verbindungen.

Eine besonders bevorzugte Verbindung der allgemeinen Formel (I) ist Di-(n-butyl)-adipat. Di-(n-butyl)-adipat ist kommerziell verfügbar beispielweise unter dem Markennamen Cetiol®B der Firma BASF SE, Ludwigshafen.

In einer weiteren bevorzugten Ausführung haben in den Verbindungen der allgemeinen Formel (II) die Reste R³ und R⁴ dieselbe Bedeutung.

Bevorzugt stehen in den Verbindungen der allgemeinen Formel (II) die Reste R³ und R⁴ beide für C₇-C₁₂-Alkyl, besonders bevorzugt beide für 2-Ethylhexyl, beide für Isononyl oder beide für 2-Propylheptyl.

Eine besonders bevorzugte Verbindung der allgemeinen Formel (II) ist Di-(2-ethylhexyl)-terephthalat.

Durch Anpassung der Anteile der Verbindungen (I) und (II) in der erfindungsgemäßen Weichmacher-Zusammensetzung können die Weichmacher-Eigenschaften auf den entsprechenden Verwendungszweck abgestimmt werden. Für den Einsatz in speziellen Anwendungsbereichen kann es gegebenenfalls hilfreich sein, der erfindungsgemäßen Weichmacher-Zusammensetzung weitere von den Verbindungen (I) und (II) verschiedene Weichmacher hinzuzufügen. Aus diesem Grund kann die erfindungsgemäße Weichmacher-Zusammensetzung gegebenenfalls wenigstens einen weiteren von den Verbindungen (I) und (II) verschiedenen Weichmacher enthalten.

Der von den Verbindungen (I) und (II) verschiedene zusätzliche Weichmacher ist ausgewählt unter Phthalsäuredialkylestern, Phthalsäurealkylaralkylestern, Cyclohexan-1,2-dicarbonsäureestern, Cyclohexan-1,4-dicarbonsäureestern, Trimellitsäuretrialkylestern, Benzoesäurealkylestern, Dibenzoesäureestern von Glycolen, Hydroxybenzoesäureestern, Estern von gesättigten Monocarbonsäuren, von Verbindungen (I) verschiedenen Estern ungesättigter Dicarbonsäuren, Amiden und Estern von aromatischen Sulfonsäuren, Alkylsulfonsäureestern, Glycerinestern, Isosorbidestern, Phosphorsäureestern, Citronensäuretriestern, Alkylpyrrolidonderivaten, 2,5-Furandicarbonsäureestern, 2,5-Tetrahydrofurandicarbonsäureestern, epoxidierten Pflanzenölen und epoxidierten Fettsäuremonoalkylestern, Polyestern aus aliphatischen und/oder aromatischen Polycarbonsäuren mit wenigstens zweiwertigen Alkoholen.

Geeignete Phthalsäuredialkylester, die in vorteilhafter Weise mit den Verbindungen (I) und (II) gemischt werden können, weisen unabhängig voneinander 4 bis 13 C-Atome, bevorzugt 8 bis 13 C-Atome, in den Alkylketten auf. Ein geeigneter Phthalsäurealkylaralkylester ist beispielsweise Benzylbutylphthalat. Geeignete Cyclohexan-1,2-dicarbonsäureester weisen unabhängig voneinander jeweils 4 bis 13 C-Atome, insbesondere 8 bis 11 C-Atome, in den Alkylketten auf. Ein geeigneter Cyclohexan-1,2-dicarbonsäureester ist beispielsweise Diisononylcyclohexan-1,2-dicarboxylat. Geeignete Cyclohexan-1,4-dicarbonsäureester weisen unabhängig voneinander jeweils 4 bis 13 C-Atome, insbesondere 8 bis 11 C-Atome, in den Alkylketten auf. Ein geeigneter Cyclohexan-1,4-dicarbonsäureester ist beispielsweise Di-2-ethylhexyl-1,4-dicarboxylat. Geeignete Trimellitsäuretrialkylester weisen bevorzugt unabhängig voneinander jeweils 4 bis 13 C-Atome, insbesondere 7 bis 11 C-Atome, in den Alkylketten auf. Geeignete Benzoesäurealkylester weisen bevorzugt unabhängig voneinander jeweils 7 bis 13 C-Atome, insbesondere 9 bis 13 C-Atome, in den Alkylketten auf. Geeignete Benzoesäurealkylester sind beispielsweise Isononylbenzoat, Isodecylbenzoat oder 2-Propylheptylbenzoat. Geeignete Dibenzoesäureester von Glycolen sind Diethylenglycoldibenzoat und Dibutylenglycoldibenzoat. Geeignete Ester von gesättigten Monocarbonsäuren sind beispielsweise Ester der Essigsäure, Buttersäure, Valeriansäure oder Milchsäure. Geeignete von den Verbindungen der Formel (I) verschiedene Ester von gesättigten Dicarbonsäuren sind beispielsweise Ester der Bernsteinsäure, Sebacinsäure, Milchsäure oder Weinsäure, oder Ester der Adipinsäure mit 6 bis 13 C-Atomen in den Alkylresten. Geeignete von den Verbindungen der Formel (I) verschiedene Ester von ungesättigten Dicarbonsäuren sind beispielsweise Ester der Maleinsäure und der Fumarsäure mit 6 bis 13 C-Atomen in den Alkylresten. Geeignete Alkylsulfonsäureester weisen vorzugsweise einen Alkylrest mit 8 bis 22 C-Atomen auf. Dazu zählen beispielsweise Phenyl- oder Cresylester der Pentadecylsulfonsäure. Geeignete Isosorbidester sind Isosorbiddiester, die bevorzugt mit C₈-C₁₃-Carbonsäuren verestert sind. Geeignete Phosphorsäureester sind Tri-2-ethylhexylphosphat, Trioctylphosphat, Triphenylphosphat, Isodecyldiphenylphosphat, Bis-(2-ethylhexyl)phenyl-phosphat und 2-Ethylhexyldiphenyl-phosphat. In den Citronensäuretriestern kann die OH-Gruppe in freier oder carboxylierter Form, bevorzugt acetyliert, vorliegen. Die Alkylreste der acetylierten Citronensäuretriester weisen bevorzugt unabhängig voneinander 4 bis 8 C-Atome, insbesondere 6 bis 8 C-Atome, auf. Geeignet sind Alkylpyrrolidonderivate mit Alkylresten von 4 bis 18 C-Atomen. Geeignete 2,5-Furandicarbonsäuredialkylester weisen unabhängig voneinander jeweils 7 bis 13 C-Atome, bevorzugt 8 bis 12 C-Atome, in den Alkylketten auf. Geeignete 2,5-Tetrahydrofurandicarbonsäuredialkylester weisen unabhängig voneinander jeweils 7 bis 13 C-Atome, bevorzugt 8 bis 12 C-Atome, in den Alkylketten auf. Ein geeignetes epoxidiertes Pflanzenöl ist beispielsweise epoxidiertes Sojaöl, z.B. erhältlich von der Firma Galata-Chemicals, Lampertheim, Germany. Epoxidierte Fettsäuremonoalkylester, beispielsweise erhältlich unter dem Handelsnamen reFlex™ der Firma PolyOne, USA, sind auch geeignet. Bei den Polyestern aus aliphatischen und aromatischen Polycarbonsäuren handelt es sich bevorzugt um Polyester der Adipinsäure mit mehrwertigen Alkoholen, insbesondere Dialkylenglycolpolyadipate mit 2 bis 6 Kohlenstoffatomen im Alkylenrest.

In allen zuvor genannten Fällen können die Alkylreste jeweils linear oder verzweigt und jeweils gleich oder verschieden sein. Auf die eingangs gemachten allgemeinen Ausführungen zu geeigneten und bevorzugten Alkylresten wird Bezug genommen.

Der Gehalt des wenigstens einen weiteren, von den Verbindungen (I) und (II) verschiedenen Weichmachers in der erfindungsgemäßen Weichmacher-Zusammensetzung beträgt üblicherweise 0 bis 50 Gew.-%, bevorzugt 0 bis 40 Gew.-%, besonders bevorzugt 0 bis 30 Gew.-% und insbesondere 0 bis 25 Gew.-%, bezogen auf die Gesamtmenge des wenigstens einen weiteren Weichmachers und der Verbindungen (I) und (II) in der Weichmacher-Zusammensetzung.

In einer bevorzugten Ausführungsform enthält die erfindungsgemäße Weichmacher-Zusammensetzung keinen weiteren von den Verbindungen (I) und (II) verschiedenen Weichmacher.

Bevorzugt beträgt der Gehalt an Verbindungen der allgemeinen Formel (I) in der erfindungsgemäßen Weichmacher-Zusammensetzung 1 bis 70 Gew.-%, besonders bevorzugt 2 bis 50 Gew.-% und insbesondere 3 bis 30 Gew.-%, bezogen auf die Gesamtmenge der Verbindungen (I) und (II) in der Weichmacher-Zusammensetzung.

Bevorzugt beträgt der Gehalt der Verbindungen der allgemeinen Formel (II) in der erfindungsgemäßen Weichmacher-Zusammensetzung 30 bis 99 Gew.-%, besonders bevorzugt 50 bis 98 Gew.-% und insbesondere 70 bis 97 Gew.-%, bezogen auf die Gesamtmenge der Verbindungen (I) und (II) in der Weichmacher-Zusammensetzung.

In der erfindungsgemäßen Weichmacher-Zusammensetzung liegt das Gewichtsverhältnis zwischen Verbindungen der allgemeinen Formel (I) und Verbindungen der allgemeinen Formel (II) bevorzugt im Bereich von 1 : 100 bis 2 : 1, besonders bevorzugt im Bereich von 1 : 50 bis 1 : 1 und insbesondere im Bereich von 1 : 35 bis 1 : 2.

### Formmassen

Ein weiterer Gegenstand der vorliegenden Erfindung betrifft eine Formmasse, enthaltend wenigstens ein Polymer und eine Weichmacher-Zusammensetzung wie zuvor definiert.

In einer bevorzugten Ausführungsform handelt es sich bei dem in der Formmasse enthaltenen Polymer um ein thermoplastisches Polymer.

Als thermoplastische Polymere kommen alle thermoplastisch verarbeitbaren Polymeren in Frage. Insbesondere sind diese thermoplastischen Polymere ausgewählt unter:
- Homo- oder Copolymere, die in einpolymerisierter Form wenigstens ein Monomer enthalten, das ausgewählt ist unter C₂-C₁₀ Monoolefinen, wie beispielsweise Ethylen oder Propylen, 1,3-Butadien, 2-Chlor-1,3-Butadien, Vinylalkohol und dessen C₂-C₁₀-Alkylestern, Vinylchlorid, Vinylidenchlorid, Vinylidenfluorid, Tetrafluorethylen, Glycidylacrylat, Glycidylmethacrylat, Acrylaten und Methacrylaten mit Alkoholkomponenten von verzweigten und unverzweigten C₁-C₁₀-Alkoholen, Vinylaromaten wie beispielsweise Styrol, (Meth)acrylnitril, α,β-ethylenisch ungesättigten Mono- und Dicarbonsäuren, und Maleinsäureanhydrid;
- Homo- und Copolymere von Vinylacetalen;
- Polyvinylestern;
- Polycarbonaten (PC);
- Polyestern, wie Polyalkylenterephthalaten, Polyhydroxyalkanoaten (PHA), Polybutylensuccinaten (PBS), Polybutylensuccinatadipaten (PBSA);
- Polyethern;
- Polyetherketonen;
- thermoplastischen Polyurethanen (TPU);
- Polysulfiden;
- Polysulfonen;
und Mischungen davon.

Zu nennen sind beispielsweise Polyacrylate mit gleichen oder verschiedenen Alkoholresten aus der Gruppe der C₄-C₈-Alkohole, besonders des Butanols, Hexanols, Octanols und 2-Ethylhexanols, Polymethylmethacrylat (PMMA), Methylmethacrylat-Butylacrylat-Copolymere, Acrylnitril-Butadien-Styrol-Copolymere (ABS), Ethylen-Propylen-Copolymere, Ethylen-Propylen-Dien-Copolymere (EPDM), Polystyrol (PS), Styrol-Acrylnitril-Copolymere (SAN), Acrylnitril-Styrol-Acrylat (ASA), Styrol-Butadien-Methylmethacrylat-Copolymere (SBMMA), Styrol-Maleinsäureanhydrid-Copolymere, Styrol-Methacrylsäure-Copolymere (SMA), Polyoxymethylen (POM), Polyvinylalkohol (PVAL), Polyvinylacetat (PVA), Polyvinylbutyral (PVB), Polycaprolacton (PCL), Polyhydroxybuttersäure (PHB), Polyhydroxyvaleriansäure (PHV), Polymilchsäure (PLA), Ethylcellulose (EC), Celluloseacetat (CA), Cellulosepropionat (CP) oder CelluloseAcetat/Butyrat (CAB).

Bevorzugt handelt es sich bei dem in der erfindungsgemäßen Formmasse enthaltenen wenigstens einen thermoplastischen Polymer um Polyvinylchlorid (PVC), Polyvinylbutyral (PVB), Homo- und Copolymere von Vinylacetat, Homo- und Copolymere von Styrol, Polyacrylate, thermoplastische Polyurethane (TPU) oder Polysulfide.

Je nachdem welches thermoplastische Polymer oder thermoplastische Polymergemisch in der Formmasse enthalten ist, werden unterschiedliche Mengen Weichmacher eingesetzt. Handelt es sich bei dem in der erfindungsgemäßen Formmasse enthaltenen wenigstens einen thermoplastischen Polymer nicht um PVC, beträgt der Gehalt der erfindungsgemäßen Weichmacher-Zusammensetzung in der Formmasse in der Regel 0,5 bis 300 phr (parts per hundred resin = Gewichtsteile pro hundert Gewichtsteile Polymer), bevorzugt 0,5 bis 130 phr, besonders bevorzugt 1 bis 100 phr.

Im Speziellen handelt es sich bei dem in der erfindungsgemäßen Formmasse enthaltenen wenigstens einem thermoplastischen Polymer um Polyvinylchlorid (PVC).

Polyvinylchlorid wird durch Homopolymerisation von Vinylchlorid erhalten. Das erfindungsgemäß verwendete Polyvinylchlorid (PVC) kann beispielsweise durch Suspensionspolymerisation, Mikrosuspensionspolymerisation, Emulsionspolymerisation oder Massenpolymerisation hergestellt werden. Die Herstellung von PVC durch Polymerisation von Vinylchlorid sowie Herstellung und Zusammensetzung von weichgemachtem PVC sind beispielsweise beschrieben in "Becker/Braun, Kunststoff-Handbuch, Band 2/1 : Polyvinylchlorid", 2. Auflage, Carl Hanser Verlag, München.

Der K-Wert, der die Molmasse des PVC charakterisiert und nach DIN 53726 bestimmt wird, liegt für das erfindungsgemäß weichgemachte PVC meist im Bereich von 57 und 90, bevorzugt im Bereich von 61 und 85, insbesondere im Bereich von 64 und 80.

Im Rahmen der Erfindung liegt der Gehalt an PVC in den erfindungsgemäßen Formmassen bei 20 bis 95 Gew.-%, bevorzugt bei 40 bis 90 Gew.-% und insbesondere bei 45 bis 85 Gew.-%.

Handelt es sich bei dem thermoplastischen Polymer in den erfindungsgemäßen Formmassen um Polyvinylchlorid beträgt der Gehalt der erfindungsgemäßen Weichmacher-Zusammensetzung in der Formmasse in der Regel 1 bis 300 phr, bevorzugt 5 bis 150 phr, besonders bevorzugt 10 bis 130 phr und insbesondere 15 bis 120 phr.

Ein weiterer Gegenstand der vorliegenden Erfindung betrifft Formmassen, enthaltend wenigstens ein Elastomer und wenigstens eine Weichmacher-Zusammensetzung wie zuvor definiert.

Bevorzugt handelt es sich bei dem in den erfindungsgemäßen Formmassen enthaltenen Elastomer um wenigstens einen natürlichen Kautschuk (NR), oder wenigstens einen auf synthetischem Wege hergestellten Kautschuk, oder Mischungen davon. Bevorzugte auf synthetischem Wege hergestellte Kautschuke sind beispielsweise Polyisopren-Kautschuk (IR), Styrol-Butadien-Kautschuk (SBR), Butadien-Kautschuk (BR), Nitril-Butadien-Kautschuk (NBR) oder ChloroprenKautschuk (CR).

Bevorzugt sind Kautschuke oder Kautschuk-Mischungen, welche sich mit Schwefel vulkanisieren lassen.

Im Rahmen der Erfindung liegt der Gehalt an Elastomer in den erfindungsgemäßen Formmassen bei 20 bis 95 Gew.-%, bevorzugt bei 45 bis 90 Gew.-% und insbesondere bei 50 bis 85 Gew.-%.

Im Rahmen der Erfindung können die Formmassen, welche wenigstens ein Elastomer enthalten, zusätzlich zu den vorstehenden Bestandteilen andere geeignete Zusatzstoffe enthalten. Beispielsweise können verstärkende Füllstoffe, wie Ruß oder Siliciumdioxid, weitere Füllstoffe, ein Methylendonor, wie Hexamethylentetramin (HMT), ein Methylenakzeptor, wie mit Cardanol (aus Cashew-Nüssen) modifizierte Phenolharze, ein Vulkanisier- oder Vernetzungsmittel, ein Vulkanisier- oder Vernetzungsbeschleuniger, Aktivatoren, verschiedene Typen von Öl, Alterungsschutzmittel und andere verschiedene Zusatzstoffe, die beispielsweise in Reifen- und anderen Kautschukmassen eingemischt werden, enthalten sein.

Handelt es sich bei dem Polymer in den erfindungsgemäßen Formmassen um Kautschuke, beträgt der Gehalt der erfindungsgemäßen Weichmacherzusammensetzung, wie oben definiert, in der Formmasse 1 bis 60 phr, bevorzugt 1 bis 40 phr, besonders bevorzugt 2 bis 30 phr.

### Zusatzstoffe Formmasse

Im Rahmen der Erfindung können die Formmassen, enthaltend wenigstens ein thermoplastisches Polymer, andere geeignete Zusatzstoffe enthalten. Beispielsweise können Stabilisatoren, Gleitmittel, Füllstoffe, Pigmente, Flamminhibitoren, Lichtstabilisatoren, Treibmittel, polymere Verarbeitungshilfsmittel, Schlagzähverbesserer, optische Aufheller, Antistatika oder Biostabilisatoren enthalten sein.

Im Folgenden werden einige geeignete Zusatzstoffe näher beschrieben. Die aufgeführten Beispiele stellen jedoch keine Einschränkung der erfindungsgemäßen Formmassen dar, sondern dienen lediglich der Erläuterung. Alle Angaben zum Gehalt sind in Gew.-%-Angaben bezogen auf die gesamte Formmasse.

Als Stabilisatoren kommen alle üblichen PVC-Stabilisatoren in fester und flüssiger Form in Betracht, beispielsweise übliche Ca/Zn-, Ba/Zn-, Pb- oder Sn-Stabilisatoren sowie auch säurebindende Schichtsilikate.

Die erfindungsgemäßen Formmassen können einen Gehalt an Stabilisatoren von 0,05 bis 7 %, bevorzugt 0,1 bis 5 %, besonders bevorzugt von 0,2 bis 4 % und insbesondere von 0,5 bis 3 % aufweisen.

Gleitmittel vermindern die Haftung zwischen den zu verarbeitenden Kunststoffen und Metalloberflächen und sollten Reibungskräften beim Mischen, Plastifizieren und Verformen entgegenwirken.

Als Gleitmittel können die erfindungsgemäßen Formmassen alle die für die Verarbeitung von Kunststoffen üblichen Gleitmittel enthalten. In Betracht kommen beispielsweise Kohlenwasserstoffe, wie Öle, Paraffine und PE-Wachse, Fettalkohole mit 6 bis 20 Kohlenstoffatomen, Ketone, Carbonsäuren, wie Fettsäuren und Montansäure, oxidiertes PE-Wachs, Metallsalze von Carbonsäuren, Carbonsäureamide sowie Carbonsäureester, beispielsweise mit den Alkoholen Ethanol, Fettalkoholen, Glycerin, Ethandiol, Pentaerythrit und langkettigen Carbonsäuren als Säurekomponente.

Die erfindungsgemäßen Formmassen können einen Gehalt an Gleitmittel von 0,01 bis 10 %, bevorzugt 0,05 bis 5 %, besonders bevorzugt von 0,1 bis 3 % und insbesondere von 0,2 bis 2 % aufweisen.

Füllstoffe beeinflussen vor allem die Druck-, Zug-, und Biegefestigkeit sowie die Härte und Wärmeformbeständigkeit von weichgemachtem PVC in positiver Weise.

Im Rahmen der Erfindung können die Formmassen auch Füllstoffe, wie beispielsweise Ruß und andere organische Füllstoffe, wie natürliche Calciumcarbonate, beispielsweise Kreide, Kalkstein und Marmor, synthetische Calciumcarbonate, Dolomit, Silikate, Kieselsäure, Sand, Diatomeenerde, Aluminiumsilikate, wie Kaolin, Glimmer und Feldspat enthalten. Vorzugsweise werden als Füllstoffe Calciumcarbonate, Kreide, Dolomit, Kaolin, Silikate, Talkum oder Ruß eingesetzt.

Die erfindungsgemäßen Formmassen können einen Gehalt an Füllstoffen von 0,01 bis 80 %, bevorzugt 0,1 bis 60 %, besonders bevorzugt von 0,5 bis 50 % und insbesondere von 1 bis 40 % aufweisen.

Die erfindungsgemäßen Formmassen können auch Pigmente enthalten, um das erhaltene Produkt an unterschiedliche Einsatzmöglichkeiten anzupassen.

Im Rahmen der vorliegenden Erfindung können sowohl anorganische Pigmente als auch organische Pigmente eingesetzt werden. Als anorganische Pigmente können beispielsweise Kobalt-Pigmente, wie CoO/Al₂O₃, und Chrom-Pigmente, beispielsweise Cr₂O₃, verwendet werden. Als organische Pigmente kommen beispielsweise Monoazopigmente, kondensierte Azopigmente, Azomethinpigmente, Anthrachinonpigmente, Chinacridone, Phthalocyaninpigmente und Dioxazinpigmente in Betracht.

Die erfindungsgemäßen Formmassen können einen Gehalt an Pigmenten von 0,01 bis 10 %, bevorzugt 0,05 bis 5 %, besonders bevorzugt von 0,1 bis 3 % und insbesondere von 0,5 bis 2 % aufweisen.

Um die Entflammbarkeit zu vermindern und die Rauchentwicklung beim Verbrennen zu verringern, können die erfindungsgemäßen Formmassen auch Flamminhibitoren enthalten.

Als Flamminhibitoren können beispielsweise Antimontrioxid, Phosphatester, Chlorparaffin, Aluminiumhydroxid oder Borverbindungen verwendet werden.

Die erfindungsgemäßen Formmassen können einen Gehalt an Flamminhibitoren von 0,01 bis 10 %, bevorzugt 0,1 bis 8 %, besonders bevorzugt von 0,2 bis 5 % und insbesondere von 0,5 bis 2 % aufweisen.

Um aus den erfindungsgemäßen Formmassen hergestellte Artikel vor einer Schädigung im Oberflächenbereich durch den Einfluss von Licht zu schützen, können die Formmassen auch Lichtstabilisatoren, z.B. UV-Absorber, enthalten.

Als Lichtstabilisatoren können im Rahmen der vorliegenden Erfindung beispielsweise Hydroxybenzophenone, Hydroxyphenylbenzotriazole, Cyanoacrylate oder sogenannte "hindered aminine light stabilizers" (HALS), wie die Derivate von 2,2,6,6-Tetramethylpiperidin, eingesetzt werden.

Die erfindungsgemäßen Formmassen können einen Gehalt an Lichtstabilisatoren, z.B. UV-Absorber, von 0,01 bis 7 %, bevorzugt 0,1 bis 5 %, besonders bevorzugt von 0,2 bis 4 % und insbesondere von 0,5 bis 3 % aufweisen.

### Herstellung der Verbindungen der allgemeinen Formel (I)

Im Folgenden wird die Herstellung der in den erfindungsgemäßen Weichmacher-Zusammensetzungen enthaltenen Verbindungen der allgemeinen Formel (I) beschrieben.

### Veresterung

Die Herstellung der Ester-Verbindungen der allgemeinen Formel (I) kann durch Veresterung entsprechender aliphatischer Dicarbonsäuren mit den entsprechenden aliphatischen Alkoholen nach üblichen dem Fachmann bekannten Verfahren erfolgen. Dazu zählt die Umsetzung wenigstens einer Alkoholkomponente, ausgewählt aus den Alkoholen R¹-OH bzw. R²-OH, mit einer Dicarbonsäure der allgemeinen Formel HO-C(=O)-X-C(=O)-OH oder einem geeigneten Derivat davon. Geeignete Derivate sind z. B. die Säurehalogenide und Säureanhydride. Ein bevorzugtes Säurehalogenid ist das Säurechlorid. Als Veresterungskatalysatoren können die dafür üblichen Katalysatoren eingesetzt werden, z. B. Mineralsäuren, wie Schwefelsäure und Phosphorsäure; organische Sulfonsäuren, wie Methansulfonsäure und p-Toluolsulfonsäure; amphotere Katalysatoren, insbesondere Titan-, Zinn (IV)- oder Zirkoniumverbindungen, wie Tetraalkoxytitane, z. B. Tetrabutoxytitan, und Zinn (IV)-oxid. Das bei der Reaktion entstehende Wasser kann durch übliche Maßnahmen, z. B. destillativ, entfernt werden. Die WO 02/38531 beschreibt ein Verfahren zur Herstellung von Estern multibasischer Carbonsäuren, bei dem man a) in einer Reaktionszone ein im Wesentlichen aus der Säurekomponente oder einem Anhydrid davon und der Alkoholkomponente bestehendes Gemisch in Gegenwart eines Veresterungskatalysators zum Sieden erhitzt, b) die Alkohol und Wasser enthaltenden Dämpfe rektifikativ in eine alkoholreiche Fraktion und eine wasserreiche Fraktion auftrennt, c) die alkoholreiche Fraktion in die Reaktionszone zurückführt und die wasserreiche Fraktion aus dem Verfahren ausleitet. Das in der WO 02/38531 beschriebene Verfahren sowie die darin offenbarten Katalysatoren eignen sich ebenfalls für die Veresterung.

Der Veresterungskatalysator wird in einer wirksamen Menge eingesetzt, die üblicherweise im Bereich von 0,05 bis 10 Gew.-%, vorzugsweise 0,1 bis 5 Gew.-%, bezogen auf die Summe von Säurekomponente (oder Anhydrid) und Alkoholkomponente, liegt.

Weitere geeignete Verfahren zur Herstellung der Verbindungen der allgemeinen Formel (I) mittels Veresterung sind beispielsweise in der US 6,310,235, US 5,324,853, DE-A 2612355 oder DE-A 1945359 beschrieben. Auf die genannten Dokumente wird in vollem Umfang Bezug genommen.

In der Regel erfolgt die Veresterung der Dicarbonsäure HO-C(=O)-X-C(=O)-OH in Anwesenheit der oben beschriebenen Alkoholkomponenten R¹-OH bzw. R²-OH mittels einer organischen Säure oder Mineralsäure, insbesondere konzentrierter Schwefelsäure. Dabei wird die Alkoholkomponente vorteilhafterweise wenigstens in der doppelten stöchiometrischen Menge, bezogen auf die Menge an Dicarbonsäure HO-C(=O)-X-C(=O)-OH oder einem geeigneten Derivat davon in der Reaktionsmischung, eingesetzt.

Die Veresterung kann in der Regel bei Umgebungsdruck oder vermindertem oder erhöhtem Druck erfolgen. Bevorzugt wird die Veresterung bei Umgebungsdruck oder vermindertem Druck durchgeführt.

Die Veresterung kann in Abwesenheit eines zugesetzten Lösungsmittels oder in Gegenwart eines organischen Lösungsmittels durchgeführt werden.

Falls die Veresterung in Gegenwart eines Lösungsmittels durchgeführt wird, handelt es sich dabei vorzugsweise um ein unter den Reaktionsbedingungen inertes organisches Lösungsmittel. Dazu gehören beispielsweise aliphatische Kohlenwasserstoffe, halogenierte aliphatische Kohlenwasserstoffe, aromatische und substituierte aromatische Kohlenwasserstoffe oder Ether. Bevorzugt ist das Lösungsmittel ausgewählt unter Pentan, Hexan, Heptan, Ligroin, Petrolether, Cyclohexan, Dichlormethan, Trichlormethan, Tetrachlormethan, Benzol, Toluol, Xylol, Chlorbenzol, Dichlorbenzolen, Dibutylether, THF, Dioxan und Mischungen davon.

Die Veresterung wird üblicherweise in einem Temperaturbereich von 50 bis 250 °C durchgeführt.

Ist der Veresterungskatalysator ausgewählt unter organischen Säuren oder Mineralsäuren, wird die Veresterung üblicherweise in einem Temperaturbereich von 50 bis 160 °C durchgeführt.

Ist der Veresterungskatalysator ausgewählt unter amphoteren Katalysatoren, wird die Veresterung üblicherweise in einem Temperaturbereich von 100 bis 250 °C durchgeführt.

Die Veresterung kann in Abwesenheit oder in Gegenwart eines Inertgases erfolgen. Unter einem Inertgas wird in der Regel ein Gas verstanden, welches unter den gegebenen Reaktionsbedingungen keine Reaktionen mit den an der Reaktion beteiligten Edukten, Reagenzien, Lösungsmitteln oder den entstehenden Produkten eingeht.

### Umesterung:

Die Herstellung der Ester-Verbindungen der allgemeinen Formel (I) kann durch Umesterung von Estern, die von den Estern der allgemeinen Formel (I) verschieden sind, mit den entsprechenden aliphatischen Alkoholen nach üblichen dem Fachmann bekannten Verfahren erfolgen. Dazu zählt die Umsetzung der Di-(C₁-C₂)-Alkylester der Dicarbonsäuren HO-C(=O)-X-C(=O)-OH mit wenigstens einem Alkohol R¹-OH bzw. R²-OH oder Gemischen davon in Anwesenheit eines geeigneten Umesterungskatalysators.

Als Umesterungskatalysatoren kommen die üblichen gewöhnlich für Umesterungsreaktionen verwendeten Katalysatoren in Betracht, die meist auch bei Veresterungsreaktionen eingesetzt werden. Hierzu zählen z. B. Mineralsäuren, wie Schwefelsäure und Phosphorsäure; organische Sulfonsäuren, wie Methansulfonsäure und p-Toluolsulfonsäure; oder spezielle Metallkatalysatoren aus der Gruppe der Zinn (IV)-Katalysatoren, beispielsweise Dialkylzinndicarboxylate wie Dibutylzinndiacetat, Trialkylzinnalkoxide, Monoalkylzinnverbindungen wie Monobutylzinndioxid, Zinnsalze wie Zinnacetat oder Zinnoxide; aus der Gruppe der Titankatalysatoren, monomere und polymere Titanate und Titanchelate wie Tetraethylorthotitanat, Tetrapropylorthotitanat, Tetrabutylorthotitanat, Triethanolamintitanat; aus der Gruppe der Zirkonkatalysatoren, Zirkonate und Zirkonchelate wie Tetrapropylzirkonat, Tetrabutylzirkonat, Triethanolaminzirkonat; sowie Lithiumkatalysatoren wie Lithiumsalze, Lithiumalkoxide; oder Aluminium(III)-, Chrom(III)-, Eisen(III)-, Kobalt(II)-, Nickel(II) und Zink(II)-acetylacetonat.

Die Menge an eingesetztem Umesterungskatalysator liegt bei 0,05 bis 5 Gew.-%, bevorzugt bei 0,1 bis 1 Gew.-%. Das Reaktionsgemisch wird bevorzugt bis zum Siedepunkt des Reaktionsgemisches erhitzt, so dass die Reaktionstemperatur in Abhängigkeit von den Reaktanten zwischen 20 °C und 200 °C liegt.

Die Umesterung kann bei Umgebungsdruck oder vermindertem oder erhöhtem Druck erfolgen. Bevorzugt wird die Umesterung bei einem Druck von 0,001 bis 200 bar, besonders bevorzugt 0,01 bis 5 bar, durchgeführt. Der bei der Umesterung abgespaltene, niedriger siedende Alkohol wird zwecks Verschiebung des Gleichgewichts der Umesterungsreaktion bevorzugt kontinuierlich abdestilliert. Die hierzu benötigte Destillationskolonne steht in der Regel in direkter Verbindung mit dem Umesterungsreaktor, vorzugsweise ist sie direkt an diesem installiert. Im Falle der Verwendung mehrerer in Serie geschalteter Umesterungsreaktoren, kann jeder dieser Reaktoren mit einer Destillationskolonne ausgerüstet sein oder es kann, vorzugsweise aus den letzten Kesseln der Umesterungsreaktorkaskade, das abgedampfte Alkoholgemisch über eine oder mehrere Sammelleitungen einer Destillationskolonne zugeführt werden. Der bei dieser Destillation zurückgewonnene höhersiedende Alkohol wird vorzugsweise wieder in die Umesterung zurückgeführt.

Im Falle der Verwendung eines amphoteren Katalysators gelingt dessen Abtrennung im Allgemeinen durch Hydrolyse und anschließende Abtrennung des gebildeten Metalloxids, z. B. durch Filtration. Bevorzugt wird nach erfolgter Reaktion der Katalysator mittels Waschen mit Wasser hydrolysiert und das ausgefallene Metalloxid abfiltriert. Gewünschtenfalls kann das Filtrat einer weiteren Aufarbeitung zur Isolierung und/oder Reinigung des Produkts unterzogen werden. Bevorzugt wird das Produkt destillativ abgetrennt.

Die Umesterung der Di-(C₁-C₂)-Alkylester der Dicarbonsäuren HO-C(=O)-X-C(=O)-OH mit wenigstens einem Alkohol R¹-OH bzw. R²-OH oder Gemischen davon erfolgt bevorzugt in Gegenwart wenigstens eines Titan (IV)-Alkoholats. Bevorzugte Titan (IV)-Alkoholate sind Tetrapropoxytitan, Tetrabutoxytitan oder Gemische davon. Bevorzugt wird die Alkoholkomponente wenigstens in der doppelten stöchiometrischen Menge, bezogen auf die eingesetzten Di-(C₁-C₂-Alkyl)-Ester eingesetzt.

Die Umesterung kann in Abwesenheit oder in Gegenwart eines zugesetzten organischen Lösungsmittels durchgeführt werden. Bevorzugt wird die Umesterung in Gegenwart eines inerten organischen Lösungsmittels durchgeführt. Geeignete organische Lösungsmittel sind die zuvor für die Veresterung genannten. Dazu zählen speziell Toluol und THF.

Die Temperatur bei der Umesterung liegt vorzugsweise in einem Bereich von 50 bis 200 °C.

Die Umesterung kann in Abwesenheit oder in Gegenwart eines Inertgases erfolgen. Unter einem Inertgas wird in der Regel ein Gas verstanden, welches unter den gegebenen Reaktionsbedingungen keine Reaktionen mit den an der Reaktion beteiligten Edukten, Reagenzien, Lösungsmitteln oder den entstehenden Produkten eingeht. Bevorzugt wird die Umesterung ohne Hinzufügen eines Inertgases durchgeführt.

Die zur Herstellung der Verbindungen der allgemeinen Formel (I) eingesetzten aliphatischen Dicarbonsäuren und aliphatischen Alkohole können entweder kommerziell erworben oder nach literaturbekannten Synthesewegen hergestellt werden.

Die erfindungsgemäße Verbindung Di-n-butyladipat ist auch kommerziell erhältlich, beispielsweise unter dem Markennamen Cetiol® B von BASF SE, Ludwigshafen, und unter dem Markennamen Adimoll® DB von Lanxess, Leverkusen.

### Verbindungen der allgemeinen Formel (II)

Die Verbindungen der allgemeinen Formel (II) können entweder kommerziell erworben oder nach im Stand der Technik bekannten Verfahren hergestellt werden.

In der Regel werden die Terephthalsäuredialkylester durch Veresterung von Terephthalsäure oder geeigneten Derivaten davon mit den entsprechenden Alkoholen erhalten. Die Veresterung kann nach üblichen dem Fachmann bekannten Verfahren erfolgen.

Den Verfahren zur Herstellung der Verbindungen der allgemeinen Formel (II) ist gemein, dass ausgehend von Terephthalsäure oder geeigneten Derivaten davon, eine Veresterung bzw. eine Umesterung durchgeführt wird, wobei die entsprechenden C₄-C₁₂-Alkanole als Edukte eingesetzt werden. Bei diesen Alkoholen handelt es sich in der Regel nicht um reine Substanzen, sondern um Isomerengemische, deren Zusammensetzung und Reinheitsgrad von dem jeweiligen Verfahren abhängt, mit dem diese dargestellt werden.

Bevorzugte C₄-C₁₂-Alkanole, die zur Herstellung der in der erfindungsgemäßen Weichmacher-Zusammensetzung enthaltenen Verbindungen (II) eingesetzt werden, können geradkettig oder verzweigt sein oder aus Gemischen aus geradkettigen und verzweigten C₄-C₁₂-Alkanolen bestehen. Dazu zählen n-Butanol, Isobutanol, n-Pentanol, Isopentanol, n-Hexanol, Isohexanol, n-Heptanol, Isoheptanol, n-Octanol, Isooctanol, 2-Ethylhexanol, n-Nonanol, Isononanol, Isodecanol, 2-Propylheptanol, n-Undecanol, Isoundecanol, n-Dodecanol oder Isododecanol. Besonders bevorzugt sind C₇-C₁₂-Alkanole, insbesondere 2-Ethylhexanol, Isononanol und 2-Propylheptanol, speziell 2-Ethylhexanol.

Verbindungen der allgemeinen Formel (II) sind kommerziell erhältlich. Ein geeigneter kommerziell erhältlicher Weichmacher der allgemeinen Formel (II) ist beispielsweise Di-(2-ethylhexyl)-terephthalat (DOTP), der unter dem Handelsnamen Palatinol® DOTP von der Firma BASF, Florham Park, NJ, USA, vertrieben wird.

### Heptanol

Die zur Herstellung der Verbindungen der allgemeinen Formel (II) eingesetzten Heptanole können geradkettig oder verzweigt sein oder aus Gemischen aus geradkettigen und verzweigten Heptanolen bestehen. Bevorzugt werden Gemische aus verzweigten Heptanolen, auch als Isoheptanol bezeichnet, verwendet, die durch die Rhodium- oder vorzugsweise Kobalt-katalysierte Hydroformylierung von Dimerpropen, erhältlich z. B. nach dem Dimersol®-Verfahren, und anschließende Hydrierung der erhaltenen Isoheptanale zu einem Isoheptanol-Gemisch hergestellt werden. Entsprechend seiner Herstellung besteht das so gewonnene Isoheptanol-Gemisch aus mehreren Isomeren. Im Wesentlichen geradkettige Heptanole können durch die Rhodium- oder vorzugsweise Kobalt-katalysierte Hydroformylierung von 1-Hexen und anschließende Hydrierung des erhaltenen n-Heptanals zu n-Heptanol erhalten werden. Die Hydroformylierung von 1-Hexen bzw. Dimerpropen kann nach an sich bekannten Verfahren erfolgen: Bei der Hydroformylierung mit homogen im Reaktionsmedium gelösten Rhodiumkatalysatoren können sowohl unkomplexierte Rhodiumcarbonyle, die in situ unter den Bedingungen der Hydroformylierungsreaktion im Hydroformylierungsreaktionsgemisch unter Einwirkung von Synthesegas z. B. aus Rhodiumsalzen gebildet werden, als auch komplexe Rhodiumcarbonylverbindungen, insbesondere Komplexe mit organischen Phosphinen, wie Triphenylphosphin, oder Organophosphiten, vorzugsweise chelatisierenden Biphosphiten, wie z. B. in US-A 5288918 beschrieben, als Katalysator verwendet werden. Bei der Kobalt-katalysierten Hydroformylierung dieser Olefine werden im Allgemeinen homogen im Reaktionsgemisch lösliche Kobaltcarbonyl-Verbindungen eingesetzt, die sich unter den Bedingungen der Hydroformylierungsreaktion unter Einwirkung von Synthesegas in situ aus Kobaltsalzen bilden. Wird die Kobalt-katalysierte Hydroformylierung in Gegenwart von Trialkyl- oder Triarylphosphinen ausgeführt, bilden sich als Hydroformylierungsprodukt direkt die gewünschten Heptanole, so dass keine weitere Hydrierung der Aldehydfunktion mehr benötigt wird.

Zur Kobalt-katalysierten Hydroformylierung des 1-Hexens bzw. der Hexenisomerengemische eignen sich beispielsweise die in Falbe, New Syntheses with Carbon Monoxide, Springer, Berlin, 1980 auf den Seiten 162 - 168, erläuterten industriell etablierten Verfahren, wie das Ruhrchemie-Verfahren, das BASF-Verfahren, das Kuhlmann-Verfahren oder das Shell-Verfahren. Während das Ruhrchemie-, BASF- und das Kuhlmann-Verfahren mit nicht ligandmodifizierten Kobaltcarbonyl-Verbindungen als Katalysatoren arbeiten und dabei Hexanal-Gemische erhalten, verwendet das Shell-Verfahren (DE-A 1593368) Phosphin- oder Phosphit-Ligandmodifizierte Kobaltcarbonyl-Verbindungen als Katalysator, die aufgrund ihrer zusätzlichen hohen Hydrieraktivität direkt zu den Hexanolgemischen führen.

Vorteilhafte Ausgestaltungen zur Durchführung der Hydroformylierung mit nichtligandmodifizierten Kobaltcarbonylkomplexen werden in DE-A 2139630, DE-A 2244373, DE-A 2404855 und WO 01014297 detailliert beschrieben.

Zur Rhodium-katalysierten Hydroformylierung des 1-Hexens bzw. der Hexenisomerengemische kann das industriell etablierte Rhodium-Niederdruck-Hydroformylierungs-verfahren mit Triphenylphosphinligand-modifizierten Rhodiumcarbonylverbindungen angewandt werden, wie es Gegenstand von US-A 4148830 ist. Vorteilhaft können zur Rhodium-katalysierten Hydroformylierung langkettiger Olefine, wie der nach den vorstehend genannten Verfahren erhaltenen Hexenisomerengemische, nicht-ligandmodifizierte Rhodiumcarbonylverbindungen als Katalysator dienen, wobei im Unterschied zum Niederdruckverfahren ein höherer Druck von 80 bis 400 bar einzustellen ist. Die Durchführung solcher Rhodium-Hochdruck-Hydroformylierungsverfahren wird in z. B. EP-A 695734, EP-B 880494 und EP-B 1047655 beschrieben.

Die nach Hydroformylierung der Hexen-Isomerengemische erhaltenen Isoheptanalgemische werden auf an sich herkömmliche Weise zu Isoheptanolgemischen katalytisch hydriert. Bevorzugt werden hierzu heterogene Katalysatoren verwendet, die als katalytisch aktive Komponente Metalle und/oder Metalloxide der VI. bis VIII. sowie der I. Nebengruppe des Periodensystems der Elemente, insbesondere Chrom, Molybdän, Mangan, Rhenium, Eisen, Kobalt, Nickel und/oder Kupfer, gegebenenfalls abgeschieden auf einem Trägermaterial wie Al₂O₃, SiO₂ und/oder TiO₂, enthalten. Solche Katalysatoren werden z. B. in DE-A 3228881, DE-A 2628987 und DE-A 2445303 beschrieben. Besonders vorteilhaft wird die Hydrierung der Isoheptanale mit einem Überschuss an Wasserstoff von 1,5 bis 20 % über der stöchiometrisch zur Hydrierung der Isoheptanale benötigten Wasserstoffmenge, bei Temperaturen von 50 bis 200 °C und bei einem Wasserstoffdruck von 25 bis 350 bar durchgeführt und zur Vermeidung von Nebenreaktionen dem Hydrierzulauf gemäß DE-A 2628987 eine geringe Menge Wasser, vorteilhaft in Form einer wässrigen Lösung eines Alkalimetallhydroxids oder-carbonats entsprechend der Lehre von WO 01087809 zugefügt.

### Octanol

2-Ethylhexanol, das für lange Jahre der in den größten Mengen produzierte Weichmacheralkohol war, kann über die Aldolkondensation von n-Butyraldehyd zu 2-Ethylhexenal und dessen anschließende Hydrierung zu 2-Ethylhexanol gewonnen werden (s. Ullmann's Encyclopedia of Industrial Chemistry; 5. Auflage, Bd. A 10, S. 137 - 140, VCH Verlagsgesellschaft GmbH, Weinheim 1987).

Im Wesentlichen geradkettige Octanole können durch die Rhodium- oder vorzugsweise Kobalt-katalysierte Hydroformylierung von 1-Hepten und anschließende Hydrierung des erhaltenen n-Octanals zu n-Octanol erhalten werden. Das dazu benötigte 1-Hepten kann aus der Fischer-Tropsch-Synthese von Kohlenwasserstoffen gewonnen werden.

Bei dem Alkohol Isooctanol handelt es sich im Unterschied zu 2-Ethylhexanol oder n-Octanol, bedingt durch seine Herstellungsweise, nicht um eine einheitliche chemische Verbindung, sondern um ein Isomerengemisch aus unterschiedlich verzweigten C₈-Alkoholen, beispielsweise aus 2,3-Dimethyl-1-hexanol, 3,5-Dimethyl-1-hexanol, 4,5-Dimethyl-1-hexanol, 3-Methyl-1-heptanol und 5-Methyl-1-heptanol, die je nach den angewandten Herstellungsbedingungen und -verfahren in unterschiedlichen Mengenverhältnissen im Isooctanol vorliegen können. Isooctanol wird üblicherweise durch die Codimerisierung von Propen mit Butenen, vorzugsweise n-Butenen, und anschließende Hydroformylierung des dabei erhaltenen Gemisches aus Heptenisomeren hergestellt. Das bei der Hydroformylierung erhaltene Octanal-Isomerengemisch kann anschließend auf an sich herkömmliche Weise zum Isooctanol hydriert werden.

Die Codimerisierung von Propen mit Butenen zu isomeren Heptenen kann vorteilhaft mit Hilfe des homogenkatalysierten Dimersol®-Verfahrens (Chauvin et al; Chem. Ind.; Mai 1974, S. 375 - 378) erfolgen, bei dem als Katalysator ein löslicher Nickel-Phosphin-Komplex in Gegenwart einer Ethylaluminiumchlor-Verbindung, beispielsweise Ethylaluminiumdichlorid, dient. Als Phosphin-Liganden für den Nickelkomplex-Katalysator können z. B. Tributylphosphin, Tri-isopropylphosphin, Tricyclohexylphosphin und/oder Tribenzylphosphin eingesetzt werden. Die Umsetzung findet bei Temperaturen von 0 bis 80 °C statt, wobei vorteilhaft ein Druck eingestellt wird, bei dem die Olefine im flüssigen Reaktionsgemisch gelöst vorliegen (Cornils; Hermann: Applied Homogeneous Catalysis with Organometallic Compounds; 2. Auflage; Bd. 1; S. 254 - 259, Wiley-VCH, Weinheim 2002).

Alternativ zum mit homogen im Reaktionsmedium gelösten Nickelkatalysatoren betriebenen Dimersol®-Verfahren kann die Codimerisierung von Propen mit Butenen auch mit auf einem Träger abgeschiedenen, heterogenen NiO-Katalysatoren durchgeführt werden, wobei ähnliche Hepten-Isomerenverteilungen erhalten werden wie beim homogen katalysierten Verfahren. Solche Katalysatoren werden beispielsweise im so genannten Octol®-Verfahren (Hydrocarbon Processing, Februar 1986, S. 31 - 33) verwendet, ein gut geeigneter spezifischer Nickel-Heterogenkatalysator zur Olefindimerisierung bzw. Codimerisierung ist z. B. in WO 9514647 offenbart.

Anstelle von Katalysatoren auf Basis von Nickel können auch Brønsted-acide heterogene Katalysatoren zur Codimerisierung von Propen mit Butenen verwendet werden, wobei in der Regel höher verzweigte Heptene als in den Nickel-katalysierten Verfahren erhalten werden. Beispiele von hierfür geeigneten Katalysatoren sind feste Phosphorsäure-Katalysatoren z. B. mit Phosphorsäure imprägnierte Kieselgur oder Diatomeenerde, wie sie vom PolyGas®-Verfahren zur Olefindi- bzw. Oligomerisierung benutzt werden (Chitnis et al; Hydrocarbon Engineering 10, Nr. 6 - Juni 2005). Zur Codimerisierung von Propen und Butenen zu Heptenen sehr gut geeignete Brønsted-acide Katalysatoren sind Zeolithe, deren sich das auf Basis des PolyGas®-Verfahrens weiterentwickelte EMOGAS®-Verfahren bedient.

Das 1-Hepten und die Hepten-Isomerengemische werden nach den vorstehend in Zusammenhang mit der Herstellung von n-Heptanal und Heptanal-Isomerengemische erläuterten bekannten Verfahren mittels Rhodium- oder Kobalt-katalysierter Hydroformylierung, vorzugsweise Kobalt-katalysierter Hydroformylierung, in n-Octanal bzw. Octanal-Isomerengemische überführt. Diese werden anschließend z. B. mittels eines der vorstehend in Zusammenhang mit der n-Heptanol- und Isoheptanol-Herstellung genannten Katalysatoren zu den entsprechenden Octanolen hydriert.

### Nonanol

Im Wesentlichen geradkettiges Nonanol kann durch die rhodium- oder vorzugsweise kobaltkatalysierte Hydroformylierung von 1-Octen und nachfolgende Hydrierung des dabei erhaltenen n-Nonanals erhalten werden. Das Ausgangsolefin 1-Octen kann beispielsweise über eine Ethylenoligomerisierung mittels einem homogen im Reaktionsmedium - 1,4-Butandiol - löslichen Nickelkomplexkatalysator mit z. B. Diphenylphosphinoessigsäure oder 2-Diphenylphosphinobenzoesäure als Liganden erhalten werden. Dieses Verfahren ist auch unter der Bezeichnung Shell Higher Olefins Process oder SHOP-Verfahren bekannt (s. Weisermel, Arpe: Industrielle Organische Chemie; 5. Auflage; S. 96; Wiley-VCH, Weinheim 1998).

Bei Isononanol, welches zur Synthese der in der erfindungsgemäßen Weichmacher-Zusammensetzung enthaltenen Diisononylester der allgemeinen Formel (II) eingesetzt wird, handelt es sich nicht um eine einheitliche chemische Verbindung, sondern um ein Gemisch aus unterschiedlich verzweigten isomeren C₉-Alkoholen, die je nach der Art ihrer Herstellung, insbesondere auch der verwendeten Ausgangsstoffe, unterschiedliche Verzweigungsgrade haben können. Im Allgemeinen werden die Isononanole durch Dimerisierung von Butenen zu Isooctengemischen, anschließende Hydroformylierung der Isooctengemische und Hydrierung der dabei erhaltenen Isononanalgemische zu Isononanolgemischen hergestellt, wie in Ullmann's Encyclopedia of Industrial Chemistry, 5. Auflage, Bd. A1, S. 291 - 292, VCH Verlagsgesellschaft GmbH, Weinheim 1995, erläutert.

Als Ausgangsmaterial zur Herstellung der Isononanole können sowohl Isobuten, cis-und trans-2-Buten als auch 1-Buten oder Gemische dieser Butenisomere verwendet werden. Bei der vorwiegend mittels flüssiger, z. B. Schwefel- oder Phosphorsäure, oder fester, z. B. auf Kieselgur, SiO₂ oder Al₂O₃ als Trägermaterial aufgebrachter Phosphorsäure oder Zeolithe oder Brønsted-Säuren katalysierten Dimerisierung von reinem Isobuten, wird überwiegend das stark verzweigte 2,4,4-Trimethylpenten, auch als Diisobutylen bezeichnet, erhalten, das nach Hydroformylierung und Hydrierung des Aldehyds hochverzweigte Isononanole liefert.

Bevorzugt sind Isononanole mit einem geringeren Verzweigungsgrad. Solche gering verzweigten Isononanol-Gemische werden aus den linearen Butenen 1-Buten, cis- und/oder trans-2-Buten, die gegebenenfalls noch geringere Mengen an Isobuten enthalten können, über den vorstehend beschriebenen Weg der Butendimerisierung, Hydroformylierung des Isooctens und Hydrierung der erhaltenen Isononanal-Gemische hergestellt. Ein bevorzugter Rohstoff ist das so genannte Raffinat II, das aus dem C₄-Schnitt eines Crackers, beispielsweise eines Steamcrackers, das nach Eliminierung von Allenen, Acetylenen und Dienen, insbesondere 1,3-Butadien, durch dessen Partialhydrierung zu linearen Butenen oder dessen Abtrennung durch Extraktivdestillation, beispielsweise mittels N-Methylpyrrolidon, und nachfolgender Brønsted-Säure katalysierter Entfernung des darin enthaltenen Isobutens durch dessen Umsetzung mit Methanol oder Isobutanol nach großtechnisch etablierten Verfahren unter Bildung des Kraftstoffadditivs Methyl-tert.-Butylether (MTBE) oder des zur Gewinnung von Rein-Isobuten dienenden Isobutyl-tert.-Butylether, gewonnen wird.

Raffinat II enthält neben 1-Buten und cis- und trans-2-Buten noch n- und iso-Butan und Restmengen von bis zu 5 Gew.-% an Isobuten.

Die Dimerisierung der linearen Butene oder des im Raffinat II enthaltenen Butengemischs kann mittels der gängigen, großtechnisch praktizierten Verfahren, wie sie vorstehend in Zusammenhang mit der Erzeugung von Isoheptengemischen erläutert wurden, beispielsweise mittels heterogener, Brønsted-acider Katalysatoren, wie sie im PolyGas®- oder EMOGAS®-Verfahren eingesetzt werden, mittels des Dimersol®-Verfahrens unter Verwendung homogen im Reaktionsmedium gelöster Nickel-Komplex-Katalysatoren oder mittels heterogener, Nickel(II)oxid-haltiger Katalysatoren nach dem Octol®-Verfahren oder dem Verfahren gemäß WO 9514647 durchgeführt werden. Die dabei erhaltenen Isoocten-Gemische werden nach den vorstehend in Zusammenhang mit der Herstellung von Heptanal-Isomerengemische erläuterten bekannten Verfahren mittels Rhodium- oder Kobalt-katalysierter Hydroformylierung, vorzugsweise Kobalt-katalysierter Hydroformylierung, in Isononanal-Gemische überführt. Diese werden anschließend z. B. mittels einem der vorstehend in Zusammenhang mit der Isoheptanol-Herstellung genannten Katalysatoren zu den geeigneten Isononanolgemischen hydriert.

Die so hergestellten Isononanol-Isomerengemische können über ihren Isoindex charakterisiert werden, der aus dem Verzweigungsgrad der einzelnen isomeren Isononanolkomponenten im Isononanolgemisch multipliziert mit deren prozentualen Anteil im Isononanolgemisch errechnet werden kann. So tragen z. B. n-Nonanol mit dem Wert 0, Methyloctanole (eine Verzweigung) mit dem Wert 1 und Dimethylheptanole (zwei Verzweigungen) mit dem Wert 2 zum Isoindex eines Isononanolgemisches bei. Je höher die Linearität, desto niedriger ist der Isoindex des betreffenden Isononanolgemisches. Dementsprechend kann der Isoindex eines Isononanolgemisches durch gaschromatographische Auftrennung des Isononanolgemisches in seine einzelnen Isomere und damit einhergehender Quantifizierung von deren prozentualen Mengenanteil im Isononanolgemisch, bestimmt nach Standardmethoden der gaschromatographischen Analyse, ermittelt werden. Zwecks Erhöhung der Flüchtigkeit und Verbesserung der gaschromatographischen Auftrennung der isomeren Nonanole werden diese zweckmäßigerweise vor der gaschromatographischen Analyse mittels Standardmethoden, beispielsweise durch Umsetzung mit N-Methyl-N-trimethylsilyltrifluoracetamid, trimethylsilyliert. Um eine möglichst gute Trennung der einzelnen Komponenten bei der gaschromatographischen Analyse zu erzielen, werden vorzugsweise Kapillarsäulen mit Polydimethylsiloxan als stationärer Phase verwendet. Solche Kapillarsäulen sind im Handel erhältlich, und es bedarf lediglich einiger weniger Routineversuche des Fachmanns, um aus dem vielfältigen Angebot des Handels ein optimal für diese Trennaufgabe geeignetes Fabrikat auszuwählen.

Die in der erfindungsgemäßen Weichmacher-Zusammensetzung verwendeten Diisononylester der allgemeinen Formel (II) sind im Allgemeinen mit Isononanolen mit einem Isoindex von 0,8 bis 2, vorzugsweise von 1,0 bis 1,8 und besonders bevorzugt von 1,1 bis 1,5 verestert, die nach den vorstehend genannten Verfahren hergestellt werden können.

Lediglich beispielhaft werden im Folgenden mögliche Zusammensetzungen von Isononanolgemischen angegeben, wie sie zur Herstellung der erfindungsgemäß eingesetzten Verbindungen der allgemeinen Formel (II) verwendet werden können, wobei anzumerken ist, dass die Anteile der im Einzelnen aufgeführten Isomeren im Isononanolgemisch abhängig von der Zusammensetzung des Ausgangsmaterials, beispielsweise Raffinat II, dessen Zusammensetzung an Butenen produktionsbedingt variieren kann und von Schwankungen in den angewandten Produktionsbedingungen, beispielsweise dem Alter der benutzten Katalysatoren und daran anzupassenden Temperatur- und Druckbedingungen, variieren können.

Beispielsweise kann ein Isononanolgemisch, das durch Kobalt-katalysierte Hydroformylierung und anschließende Hydrierung aus einem unter Verwendung von Raffinat II als Rohstoff mittels des Katalysators und Verfahrens gemäß WO 9514647 erzeugten Isooctengemisches hergestellt wurde, folgende Zusammensetzung haben:
- 1,73 bis 3,73 Gew.-%, bevorzugt 1,93 bis 3,53 Gew.-%, besonders bevorzugt 2,23 bis 3,23 Gew.-% 3-Ethyl-6-methyl-hexanol;
- 0,38 bis 1,38 Gew.-%, bevorzugt 0,48 bis 1,28 Gew.-%, besonders bevorzugt 0,58 bis 1,18 Gew.-% 2,6-Dimethylheptanol;
- 2,78 bis 4,78 Gew.-%, bevorzugt 2,98 bis 4,58 Gew.-%, besonders bevorzugt 3,28 bis 4,28 Gew.-% 3,5-Dimethylheptanol;
- 6,30 bis 16,30 Gew.-%, bevorzugt 7,30 bis 15,30 Gew.-%, besonders bevorzugt 8,30 bis 14,30 Gew.-% 3,6-Dimethylheptanol;
- 5,74 bis 11,74 Gew.-%, bevorzugt 6,24 bis 11,24 Gew.-%, besonders bevorzugt 6,74 bis 10,74 Gew.-% 4,6-Dimethylheptanol;
- 1,64 bis 3,64 Gew.-%, bevorzugt 1,84 bis 3,44 Gew.-%, besonders bevorzugt 2,14 bis 3,14 Gew.-% 3,4,5-Trimethylhexanol;
- 1,47 bis 5,47 Gew.-%, bevorzugt 1,97 bis 4,97 Gew.-%, besonders bevorzugt 2,47 bis 4,47 Gew.-% 3,4,5-Trimethylhexanol, 3-Methyl-4-ethylhexanol und 3-Ethyl-4-methylhexanol;
- 4,00 bis 10,00 Gew.-%, bevorzugt 4,50 bis 9,50 Gew.-%, besonders bevorzugt 5,00 bis 9,00 Gew.-% 3,4-Dimethylheptanol;
- 0,99 bis 2,99 Gew.-%, bevorzugt 1,19 bis 2,79 Gew.-%, besonders bevorzugt 1,49 bis 2,49 Gew.-% 4-Ethyl-5-methylhexanol und 3-Ethylheptanol;
- 2,45 bis 8,45 Gew.-%, bevorzugt 2,95 bis 7,95 Gew.-%, besonders bevorzugt 3,45 bis 7,45 Gew.-% 4,5-Dimethylheptanol und 3-Methyloctanol;
- 1,21 bis 5,21 Gew.-%, bevorzugt 1,71 bis 4,71 Gew.-%, besonders bevorzugt 2,21 bis 4,21 Gew.-% 4,5-Dimethylheptanol;
- 1,55 bis 5,55 Gew.-%, bevorzugt 2,05 bis 5,05 Gew.-%, besonders bevorzugt 2,55 bis 4,55 Gew.-% 5,6-Dimethylheptanol;
- 1,63 bis 3,63 Gew.-%, bevorzugt 1,83 bis 3,43 Gew.-%, besonders bevorzugt 2,13 bis 3,13 Gew.-% 4-Methyloctanol;
- 0,98 bis 2,98 Gew.-%, bevorzugt 1,18 bis 2,78 Gew.-%, besonders bevorzugt 1,48 bis 2,48 Gew.-% 5-Methyloctanol;
- 0,70 bis 2,70 Gew.-%, bevorzugt 0,90 bis 2,50 Gew.-%, besonders bevorzugt 1,20 bis 2,20 Gew.-% 3,6,6-Trimethylhexanol;
- 1,96 bis 3,96 Gew.-%, bevorzugt 2,16 bis 3,76 Gew.-%, besonders bevorzugt 2,46 bis 3,46 Gew.-% 7-Methyloctanol;
- 1,24 bis 3,24 Gew.-%, bevorzugt 1,44 bis 3,04 Gew.-%, besonders bevorzugt 1,74 bis 2,74 Gew.-% 6-Methyloctanol;
- 0,1 bis 3 Gew.-%, bevorzugt 0,2 bis 2 Gew.-%, besonders bevorzugt 0,3 bis 1 Gew.-% n-Nonanol;
- 25 bis 35 Gew.-%, bevorzugt 28 bis 33 Gew.-%, besonders bevorzugt 29 bis 32 Gew.-% sonstige Alkohole mit 9 und 10 Kohlenstoffatomen; mit der Maßgabe, dass die Gesamtsumme der genannten Komponenten 100 Gew.-% ergibt.

Entsprechend den vorstehenden Ausführungen kann ein Isononanolgemisch, das durch Kobalt-katalysierte Hydroformylierung und anschließende Hydrierung unter Verwendung eines Ethylen-haltigen Butengemisches als Rohstoff mittels des PolyGas®- oder EMOGAS®-Verfahrens erzeugten Isooctengemisches hergestellt wurde, im Bereich der folgenden Zusammensetzungen, abhängig von der Rohstoffzusammensetzung und Schwankungen der angewandten Reaktionsbedingungen variieren:
- 6,0 bis 16,0 Gew.-%, bevorzugt 7,0 bis 15,0 Gew.-%, besonders bevorzugt 8,0 bis 14,0 Gew.-% n-Nonanol;
- 12,8 bis 28,8 Gew.-%, bevorzugt 14,8 bis 26,8 Gew.-%, besonders bevorzugt 15,8 bis 25,8 Gew.-% 6-Methyloctanol;
- 12,5 bis 28,8 Gew.-%, bevorzugt 14,5 bis 26,5 Gew.-%, besonders bevorzugt 15,5 bis 25,5 Gew.-% 4-Methyloctanol;
- 3,3 bis 7,3 Gew.-%, bevorzugt 3,8 bis 6,8 Gew.-%, besonders bevorzugt 4,3 bis 6,3 Gew.-% 2-Methyloctanol;
- 5,7 bis 11,7 Gew.-%, bevorzugt 6,3 bis 11,3 Gew.-%, besonders bevorzugt 6,7 bis 10,7 Gew.-% 3-Ethylheptanol;
- 1,9 bis 3,9 Gew.-%, bevorzugt 2,1 bis 3,7 Gew.-%, besonders bevorzugt 2,4 bis 3,4 Gew.-% 2-Ethylheptanol;
- 1,7 bis 3,7 Gew.-%, bevorzugt 1,9 bis 3,5 Gew.-%, besonders bevorzugt 2,2 bis 3,2 Gew.-% 2-Propylhexanol;
- 3,2 bis 9,2 Gew.-%, bevorzugt 3,7 bis 8,7 Gew.-%, besonders bevorzugt 4,2 bis 8,2 Gew.-% 3,5-Dimethylheptanol;
- 6,0 bis 16,0 Gew.-%, bevorzugt 7,0 bis 15,0 Gew.-%, besonders bevorzugt 8,0 bis 14,0 Gew.-% 2,5-Dimethylheptanol;
- 1,8 bis 3,8 Gew.-%, bevorzugt 2,0 bis 3,6 Gew.-%, besonders bevorzugt 2,3 bis 3,3 Gew.-% 2,3-Dimethylheptanol;
- 0,6 bis 2,6 Gew.-%, bevorzugt 0,8 bis 2,4 Gew.-%, besonders bevorzugt 1,1 bis 2,1 Gew.-% 3-Ethyl-4-methylhexanol;
- 2,0 bis 4,0 Gew.-%, bevorzugt 2,2 bis 3,8 Gew.-%, besonders bevorzugt 2,5 bis 3,5 Gew.-% 2-Ethyl-4-methylhexanol;
- 0,5 bis 6,5 Gew.-%, bevorzugt 1,5 bis 6 Gew.-%, besonders bevorzugt 1,5 bis 5,5 Gew.-% sonstige Alkohole mit 9 Kohlenstoffatomen;
mit der Maßgabe, dass sich die Gesamtsumme der genannten Komponenten 100 Gew.-% ergibt.

### Decanol

Bei Isodecanol, welches zur Synthese der in der erfindungsgemäßen Weichmacher-Zusammensetzung enthaltenen Diisodecylester der allgemeinen Formel (II) eingesetzt wird, handelt es sich nicht um eine einheitliche chemische Verbindung, sondern um ein komplexes Gemisch unterschiedlich verzweigter isomerer Decanole.

Diese werden im Allgemeinen durch die Nickel- oder Brønsted-Säure-katalysierte Trimerisierung von Propylen, beispielsweise nach dem vorstehend erläuterten PolyGas®- oder dem EMOGAS®-Verfahren, nachfolgende Hydroformylierung des dabei erhaltenen Isononen-Isomerengemisches mittels homogener Rhodium- oder Kobaltcarbonyl-Katalysatoren, vorzugsweise mittels Kobaltcarbonyl-Katalysatoren und Hydrierung des entstandenen Isodecanal-Isomerengemisches, z. B. mittels der vorstehend in Zusammenhang mit der Herstellung von C₇-C₉-Alkoholen genannten Katalysatoren und Verfahren (Ullmann's Encyclopedia of Industrial Chemistry; 5. Auflage, Bd. A1, S. 293, VCH Verlagsgesellschaft GmbH, Weinheim 1985), hergestellt. Das so produzierte Isodecanol ist im Allgemeinen stark verzweigt.

Bei 2-Propylheptanol, welches zur Synthese der in der erfindungsgemäßen Weichmacher-Zusammensetzung enthaltenen Di(2-propylheptyl)ester der allgemeinen Formel (II) eingesetzt wird, kann es sich um reines 2-Propylheptanol handeln oder um Propylheptanol-Isomerengemische, wie sie im Allgemeinen bei der industriellen Herstellung von 2-Propylheptanol gebildet werden und gemeinhin ebenfalls als 2-Propylheptanol bezeichnet werden.

Reines 2-Propylheptanol kann durch Aldolkondensation von n-Valeraldehyd und nachfolgende Hydrierung des dabei gebildeten 2-Propylheptenals, beispielsweise gemäß US-A 2921089, erhalten werden. Im Allgemeinen enthält kommerziell erhältliches 2-Propylheptanol neben der Hauptkomponente 2-Propylheptanol herstellungsbedingt eines oder mehrere der 2-Propylheptanol-Isomeren 2-Propyl-4-methylhexanol, 2-Propyl-5-methylhexanol, 2-Isopropyl-heptanol, 2-Isopropyl-4-methylhexanol, 2-Isopropyl-5-methylhexanol und/oder 2-Propyl-4,4-dimethylpentanol. Die Anwesenheit anderer Isomere des 2-Propylheptanols, beispielsweise 2-Ethyl-2,4-dimethylhexanol, 2-Ethyl-2-methyl-heptanol und/oder 2-Ethyl-2,5-dimethylhexanol im 2-Propylheptanol, ist möglich, aufgrund der geringen Bildungsraten der aldehydischen Vorläufer dieser Isomere im Zuge der Aldolkondensation sind diese, wenn überhaupt, nur in Spurenmengen im 2-Propylheptanol enthalten und spielen für die Weichmachereigenschaften des aus solchen 2-Propyheptanol-Isomerengemischen hergestellten Verbindungen praktisch keine Rolle.

Als Ausgangsmaterial zur Herstellung von 2-Propylheptanol können verschiedenerlei Kohlenwasserstoffquellen benutzt werden, beispielsweise 1-Buten, 2-Buten, Raffinat I-ein aus dem C₄-Schnitt eines Crackers nach Abtrennung von Allenen, Acetylenen und Dienen erhaltenes Alkan/Alken-Gemisch, das neben 1- und 2-Buten noch erhebliche Mengen an Isobuten enthält - oder Raffinat II, das aus Raffinat I durch Abtrennung von Isobuten erhalten wird und als Olefinkomponenten außer 1- und 2-Buten nur noch geringe Anteile an Isobuten enthält. Selbstverständlich können auch Gemische aus Raffinat I und Raffinat II als Rohstoff zur 2-Propylheptanol-Herstellung verwendet werden. Diese Olefine oder Olefingemische können nach an sich herkömmlichen Methoden mit Kobalt- oder Rhodium-Katalysatoren hydroformyliert werden, wobei aus 1-Buten ein Gemisch aus n- und iso-Valeraldehyd - die Bezeichnung iso-Valeraldehyd bezeichnet die Verbindung 2-Methylbutanal - gebildet wird, dessen n/iso-Verhältnis je nach verwendetem Katalysator und Hydroformylierungsbedingungen in relativ weiten Grenzen variieren kann. Beispielsweise wird bei Verwendung eines mit Triphenylphosphin modifizierten homogenen Rhodium-Katalysators (Rh/TPP) aus 1-Buten n- und iso-Valeraldehyd in einem n/iso-Verhältnis von im Allgemeinen 10 : 1 bis 20 : 1 gebildet, wohingegen bei Verwendung von mit Phosphit-Liganden, beispielsweise gemäß US-A 5288918 oder WO 05028407, oder von mit Phosphoamidit-Liganden, beispielsweise gemäß WO 0283695, modifizierten Rhodium-Hydroformylierungskatalysatoren fast ausschließlich n-Valeraldehyd gebildet wird. Während das Rh/TPP-Katalysatorsystem 2-Buten bei der Hydroformylierung nur sehr langsam umsetzt, so dass der größte Teil des 2-Butens aus dem Hydroformylierungsgemisch wieder zurückgewonnen werden kann, gelingt die Hydroformylierung des 2-Butens mit den erwähnten Phosphit-Ligand- oder Phosphoramidit-Ligand-modifizierten Rhodium-Katalysatoren, wobei vorwiegend n-Valeraldehyd gebildet wird. Hingegen wird im olefinischen Rohstoff enthaltenes Isobuten, wenn auch mit unterschiedlicher Geschwindigkeit, von praktisch allen Katalysatorsystemen zu 3-Methylbutanal und je nach Katalysator in geringerem Umfang zu Pivalaldehyd hydroformyliert.

Die je nach verwendeten Ausgangsmaterialien und Katalysatoren erhaltenen C₅-Aldehyde, d. h. n-Valeraldehyd gegebenenfalls im Gemisch mit iso-Valeraldehyd, 3-Methylbutanal und/oder Pivalaldehyd, können vor der Aldolkondensation gewünschtenfalls vollständig oder teilweise destillativ in die Einzelkomponenten aufgetrennt werden, so dass auch hier eine Möglichkeit besteht, die Isomerenzusammensetzung der C₁₀-Alkoholkomponente der erfindungsgemäß eingesetzten Estergemische zu beeinflussen und zu steuern. Desgleichen ist es möglich, das C₅-Aldehydgemisch, wie es bei der Hydroformylierung gebildet wird, ohne die vorherige Abtrennung einzelner Isomere der Aldolkondensation zuzuführen. Bei der Aldolkondensation, die mittels eines basischen Katalysators, wie einer wässrigen Lösung von Natrium- oder Kaliumhydroxid, beispielsweise nach den in EP-A 366089, US-A 4426524 oder US-A 5434313 beschriebenen Verfahren durchgeführt werden kann, entsteht bei Einsatz von n-Valeraldehyd als einziges Kondensationsprodukt 2-Propylheptenal, wohingegen bei Einsatz eines Gemisches isomerer C₅-Aldehyde ein Isomerengemisch aus den Produkten der Homoaldolkondensation gleicher Aldehydmoleküle und der gekreuzten Aldolkondensation unterschiedlicher Valeraldehyd-Isomere geformt wird. Selbstverständlich kann die Aldolkondensation durch die gezielte Umsetzung einzelner Isomere so gesteuert werden, dass überwiegend oder vollständig ein einzelnes Aldolkondensationsisomer gebildet wird. Die betreffenden Aldolkondensationsprodukte können anschließend, üblicherweise nach vorausgegangener, vorzugsweise destillativer Abtrennung aus der Reaktionsmischung und gewünschtenfalls destillativer Reinigung, mit herkömmlichen Hydrierkatalysatoren, beispielsweise den vorstehend zur Hydrierung von Aldehyden genannten, zu den entsprechenden Alkoholen oder Alkoholgemischen hydriert werden.

Wie bereits erwähnt, können die in der erfindungsgemäßen Weichmacher-Zusammensetzung enthaltenen Verbindungen der allgemeinen Formel (II) mit reinem 2-Propylheptanol verestert sein. Im Allgemeinen werden zur Herstellung dieser Ester jedoch Gemische des 2-Propylheptanols mit den genannten Propylheptanol-Isomeren eingesetzt, in denen der Gehalt an 2-Propylheptanol mindestens 50 Gew.-%, vorzugsweise 60 bis 98 Gew.-% und besonders bevorzugt 80 bis 95 Gew.-%, insbesondere 85 bis 95 Gew.-% beträgt.

Geeignete Mischungen von 2-Propylheptanol mit den Propylheptanol-Isomeren umfassen beispielsweise solche aus 60 bis 98 Gew.-% 2-Propylheptanol, 1 bis 15 Gew.-% 2-Propyl-4-methyl-hexanol und 0,01 bis 20 Gew.-% 2-Propyl-5-methyl-hexanol und 0,01 bis 24 Gew.-% 2-Isopropylheptanol, wobei die Summe der Anteile der einzelnen Bestandteile 100 Gew.-% nicht überschreitet. Bevorzugt addieren sich die Anteile der einzelnen Bestandteile zu 100 Gew.-%.

Weitere geeignete Mischungen aus 2-Propylheptanol mit den Propylheptanol-Isomeren umfassen beispielsweise solche aus 75 bis 95 Gew.-% 2-Propylheptanol, 2 bis 15 Gew.-% 2-Propyl-4-methyl-hexanol, 1 bis 20 Gew.-% 2-Propyl-5-methyl-hexanol, 0,1 bis 4 Gew.-% 2-Isopropylheptanol, 0,1 bis 2 Gew.-% 2-Isopropyl-4-methylhexanol und 0,1 bis 2 Gew.-% 2-Isopropyl-5-methyl-hexanol, wobei die Summe der Anteile der einzelnen Bestandteile 100 Gew.-% nicht überschreitet. Bevorzugt addieren sich die Anteile der einzelnen Bestandteile zu 100 Gew.-%.

Bevorzugte Mischungen von 2-Propylheptanol mit den Propylheptanol-Isomeren umfassen solche mit 85 bis 95 Gew.-% 2-Propylheptanol, 5 bis 12 Gew.-% 2-Propyl-4-methyl-hexanol und 0,1 bis 2 Gew.-% 2-Propyl-5-methylhexanol und 0,01 bis 1 Gew.-% 2-Isopropylheptanol, wobei die Summe der Anteile der einzelnen Bestandteile 100 Gew.-% nicht überschreitet. Bevorzugt addieren sich die Anteile der einzelnen Bestandteile zu 100 Gew.-%.

Bei Verwendung der genannten 2-Propylheptanol-Isomerengemische anstelle von reinem 2-Propylheptanol zur Herstellung der Verbindungen der allgemeinen Formel (II) entspricht die Isomerenzusammensetzung der Alkylestergruppen bzw. Alkylethergruppen praktisch der Zusammensetzung der zur Veresterung verwendeten Propylheptanol-Isomerengemische.

### Undecanol

Die Undecanole, die zur Herstellung der in der erfindungsgemäßen Weichmacher-Zusammensetzung enthaltenen Verbindungen der allgemeinen Formel (II) eingesetzt werden, können geradkettig oder verzweigt sein oder aus Gemischen geradkettiger und verzweigter Undecanole zusammengesetzt sein. Bevorzugt werden Gemische aus verzweigten Undecanolen, auch als Isoundecanol bezeichnet, als Alkoholkomponente verwendet.

Im Wesentlichen geradkettiges Undecanol kann durch die Rhodium- oder vorzugsweise Kobalt-katalysierte Hydroformylierung von 1-Decen und nachfolgende Hydrierung des dabei erhaltenen n-Undecanals erhalten werden. Das Ausgangsolefin 1-Decen wird über das zuvor bei der Herstellung von 1-Octen erwähnte SHOP-Verfahren hergestellt.

Zur Herstellung verzweigten Isoundecanols kann das im SHOP-Verfahren erhaltene 1-Decen einer Skelettisomerisierung, z. B. mittels acider zeolithischer Molekularsiebe, wie in WO 9823566 beschrieben, unterzogen werden, wobei sich Gemische aus isomeren Decenen bilden, deren Rhodium- oder vorzugsweise Kobalt-katalysierte Hydroformylierung und nachfolgende Hydrierung der erhaltenen Isoundecanal-Gemische zu dem zur Herstellung der erfindungsgemäß eingesetzten Verbindungen (II) verwendeten Isoundecanols führt. Die Hydroformylierung von 1-Decen oder Isodecen-Gemischen mittels Rhodium- oder Kobalt-Katalyse kann wie zuvor in Zusammenhang mit der Synthese von C₇- bis C₁₀-Alkoholen beschrieben erfolgen. Entsprechendes gilt für die Hydrierung von n-Undecanal oder Isoundecanal-Gemischen zu n-Undecanol bzw. Isoundecanol.

Nach destillativer Reinigung des Austrags der Hydrierung können die so erhaltenen C₇-bis C₁₁-Alkylalkohole bzw. deren Gemische, wie vorstehend beschrieben, zur Herstellung der erfindungsgemäß eingesetzten Diesterverbindungen der allgemeinen Formel (II) verwendet werden.

### Dodecanol

Im Wesentlichen geradkettiges Dodecanol kann in vorteilhafter Weise über das Alfol®- oder Epal®-Verfahren gewonnen werden. Diese Verfahren beinhalten die Oxidation und Hydrolyse geradkettiger Trialkylaluminium-Verbindungen, welche ausgehend von Triethylaluminium schrittweise über mehrere Ethylierungsreaktionen unter Verwendung von Ziegler-Natta-Katalysatoren aufgebaut werden. Aus den daraus resultierenden Gemischen weitgehend geradkettiger Alkylalkohole unterschiedlicher Kettenlänge kann nach dem destillativen Austrag der C₁₂-Alkylalkohol-Fraktion das gewünschte n-Dodecanol erhalten werden.

Alternativ kann n-Dodecanol auch durch Hydrogenierung natürlicher Fettsäuremethylester, beispielsweise aus Kokosnussöl, hergestellt werden.

Verzweigtes Isododecanol kann analog zu den bekannten Verfahren zur Codimerisierung und/oder Oligomerisierung von Olefinen, wie beispielsweise in der WO 0063151 beschrieben, mit nachfolgender Hydroformylierung und Hydrierung der Isoundecen-Gemische, wie beispielsweise in der DE-A 4339713 beschrieben, erhalten werden. Nach destillativer Reinigung des Austrags der Hydrierung können die so erhaltenen Isododecanole bzw. deren Gemische, wie vorstehend beschrieben, zur Herstellung der erfindungsgemäß eingesetzten Diesterverbindungen der allgemeinen Formel (II) verwendet werden.

### Plastisolanwendungen

Wie bereits dargelegt eignet sich die erfindungsgemäße Weichmacher-Zusammensetzung aufgrund ihrer guten Geliereigenschaften insbesondere zur Herstellung von Plastisolen.

Ein weiterer Gegenstand der Erfindung betrifft daher die Verwendung einer Weichmacher-Zusammensetzung, wie zuvor definiert, als Weichmacher in einem Plastisol.

Plastisole können aus verschiedenen Kunststoffen hergestellt werden. Bei den erfindungsgemäßen Plastisolen handelt es sich in einer bevorzugten Ausführungsform um ein PVC-Plastisol.

Der Anteil an erfindungsgemäßer Weichmacher-Zusammensetzung in den PVC-Plastisolen beträgt üblicherweise 5 bis 300 phr, bevorzugt 50 bis 200 phr.

Plastisole werden üblicherweise bei Umgebungstemperatur durch verschiedene Verfahren, wie Streichverfahren, Siebdruckverfahren, Gießverfahren, wie das Schalengieß- oder Rotationsgießverfahren, Tauchverfahren, Spritzverfahren und dergleichen in die Form des fertigen Produkts gebracht. Anschließend erfolgt durch Erwärmung die Gelierung, wobei nach Abkühlung ein homogenes, mehr oder weniger flexibles Produkt erhalten wird.

PVC-Plastisole eignen sich insbesondere zur Herstellung von PVC-Folien, für die Herstellung von nahtlosen Hohlkörpern, Handschuhen und zur Anwendung im Textilbereich, wie z. B. für Textilbeschichtungen.

Speziell eignen sich die PVC-Plastisole auf Basis der erfindungsgemäßen Weichmacher-Zusammensetzung zur Produktion von künstlichem Leder, z.B. von künstliches Leder für den Kraftfahrzeugbau; Unterbodenschutz für Kraftfahrzeuge; Nahtabdichtungen; Teppichrückseitenbeschichtungen; schwere Beschichtungen; Förderbänder; Tauchbeschichtungen und mittels Tauchverfahren hergestellte Artikel; Spielzeug, wie Puppen, Bälle oder Spielzeugtiere; anatomische Modelle für die Ausbildung; Bodenbeläge; Wandbeläge; (beschichtete) Textilien, wie Latex-Kleidung, Schutzbekleidung oder Regenkleidung, wie Regenjacken; Planen; Zelte; Bandbeschichtungen; Dachbahnen; Dichtungsmassen für Verschlüsse; Atemmasken und Handschuhe.

### Anwendungen Formmasse

Die erfindungsgemäße Formmasse wird bevorzugt für die Herstellung von Formkörpern und Folien verwendet. Dazu gehören insbesondere Gehäuse von Elektrogeräten, wie beispielsweise Küchengeräten und Computergehäuse; Werkzeuge; Apparate; Rohrleitungen; Kabel; Schläuche, wie beispielsweise Kunststoffschläuche, Wasser- und Bewässerungsschläuche, Industrie-Gummischläuche oder Chemieschläuche; Draht-Ummantelungen; Fensterprofile; Komponenten für den Fahrzeugbau, wie beispielsweise Karosseriebestandteile, Vibrationsdämpfer für Motoren; Reifen; Möbel, wie beispielsweise Stühle, Tische oder Regale; Schaumstoff für Polster und Matratzen; Dichtungen; Verbundfolien, wie Folien für Verbundsicherheitsglas, insbesondere für Fahrzeug- und Fensterscheiben; Schallplatten; Verpackungsbehälter; Klebebandfolien oder Beschichtungen.

Daneben eignet sich die erfindungsgemäße Formmasse zusätzlich für die Herstellung von Formkörpern und Folien, die direkt mit Menschen oder Nahrungsmitteln in Kontakt kommen. Dabei handelt es sich vorwiegend um Medizinprodukte, Hygieneprodukte, Lebensmittelverpackungen, Produkte für den Innenraumbereich, Spielzeug und Kinderpflegeartikel, Sport- und Freizeitprodukte, Bekleidung oder Fasern für Gewebe und dergleichen.

Bei den Medizinprodukten, die aus der erfindungsgemäßen Formmasse hergestellt werden können, handelt es sich beispielsweise um Schläuche für enterale Ernährung und Hämodialyse, Beatmungsschläuche, Infusionsschläuche, Infusionsbeutel, Blutbeutel, Katheter, Trachealtuben, Einmalspritzen, Handschuhe oder Atemmasken.

Bei den Lebensmittelverpackungen, die aus der erfindungsgemäßen Formmasse hergestellt werden können, handelt es sich beispielsweise um Frischhaltefolien, Lebensmittelschläuche, Trinkwasserschläuche, Behälter zur Aufbewahrung oder zum Einfrieren von Lebensmitteln, Deckeldichtungen, Verschlusskappen, Kronkorken oder künstliche Weinkorken.

Bei den Produkten für den Innenraumbereich, die aus der erfindungsgemäßen Formmasse hergestellt werden können, handelt es sich beispielsweise um Bodenbeläge, welche homogen oder aus mehreren Schichten, bestehend aus mindestens einer geschäumten Schicht, aufgebaut sein können, wie beispielsweise Fußbodenbeläge, Sportböden oder Luxury Vinyl Tiles (LVT), Kunstleder, Wandbeläge oder geschäumte oder nicht geschäumte Tapeten in Gebäuden oder um Verkleidungen oder Konsolenabdeckungen in Fahrzeugen.

Bei den Spielzeugen und Kinderpflegeartikeln, die aus der erfindungsgemäßen Formmasse hergestellt werden können, handelt es sich beispielsweise um Puppen, aufblasbares Spielzeug wie Bälle, Spielfiguren, Tierfiguren, anatomische Modelle für die Schulung, Knete, Schwimmhilfen, Kinderwagen-Abdeckhauben, Wickelauflagen, Wärmflaschen, Beißringe oder Fläschchen.

Bei den Sport und Freizeitprodukten, die aus der erfindungsgemäßen Formmasse hergestellt werden können, handelt es sich beispielsweise um Gymnastikbälle, Übungsmatten, Sitzkissen, Massagebälle und -rollen, Schuhe bzw. Schuhsohlen, Bälle, Luftmatratzen oder Trinkflaschen.

Bei der Bekleidung, die aus den erfindungsgemäßen Formmassen hergestellt werden können, handelt es sich beispielsweise um Gummistiefel.

### Nicht-PVC-Anwendungen

Daneben beinhaltet die vorliegende Erfindung die Verwendung der erfindungsgemäßen Weichmacher-Zusammensetzung als Hilfsmittel oder/und in Hilfsmitteln, ausgewählt unter: Kalandrierhilfsmitteln; Rheologiehilfsmitteln; oberflächenaktive Zusammensetzungen wie Fließ-, Filmbildehilfen, Entschäumern, Schaumverhütern, Benetzungsmitteln, Koaleszenzmitteln und Emulgatoren; Schmierstoffen, wie Schmierölen, Schmierfetten und Schmierpasten; Quenchern für chemische Reaktionen; Phlegmatisierungsmitteln; pharmazeutischen Produkten; Weichmachern in Klebstoffen oder Dichtstoffen; Schlagzähmodifizierern und Stellmitteln.

Die Erfindung wird anhand der im Folgenden beschriebenen Figuren und der Beispiele näher erläutert. Dabei sollen die Figuren und Beispiele nicht als einschränkend für die Erfindung verstanden werden.

In den nachfolgenden Beispielen und Figuren werden folgende Abkürzungen verwendet:
DBA steht für Di-(n-butyl)-adipat
INB steht für Isononylbenzoat,
IDB steht für Isodecylbenzoat,
DOTP steht für Di-(2-ethylhexyl)-terephthalat,
DINP für Diisononylphthalat,
phr steht für Gewichtsteile pro 100 Gewichtsteile Polymer.

### FIGURENBESCHREIBUNG

Figur 1:

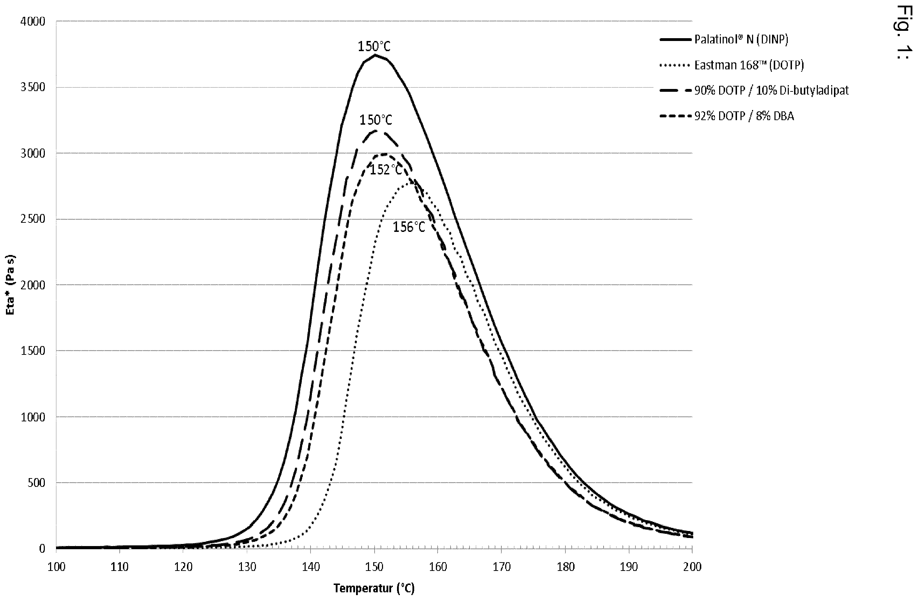

   Figur 1 zeigt das Gelierverhalten von PVC-Plastisolen mit einem Gesamtanteil an erfindungsgemäßer Weichmacher-Zusammensetzung von jeweils 100 phr. Dargestellt ist die komplexe Viskosität η^{*} [Pa·s] der Plastisole in Abhängigkeit der Temperatur [°C]. Dabei wurden Weichmacher-Zusammensetzungen verwendet, die den kommerziell erhältlichen Weichmacher DOTP (Eastman 168™) und den Schnellgelierer DBA (Di-n-butyladipat) in unterschiedlichen Mengenverhältnissen enthalten. Zusätzlich ist als Vergleich das Gelierverhalten von PVC-Plastisolen dargestellt, die ausschließlich die kommerziell erhältlichen Weichmacher DOTP (Eastman 168™) oder DINP (Palatinol® N) enthalten.
Figur 2:

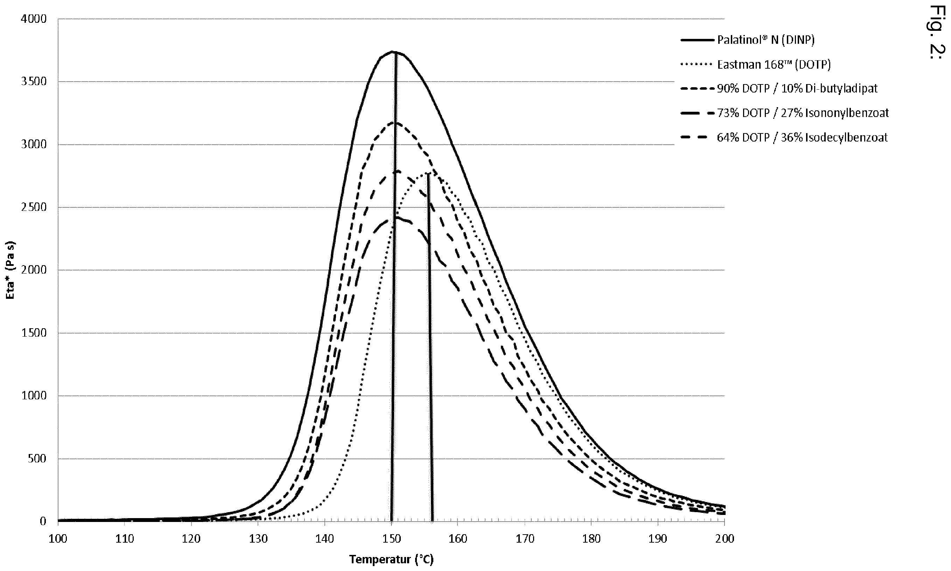

   Figur 2 zeigt das Gelierverhalten von PVC-Plastisolen, die als Weichmacher spezifische Abmischungen von DOTP (Eastman 168™) mit dem Schnellgelierer DBA (Di-n-butyladipat) und den kommerziell erhältlichen Schnellgelierern INB (Vestinol® INB) oder IDB (Jayflex® MB 10) enthalten. Dargestellt ist die komplexe Viskosität η^{*} [Pa·s] der Plastisole in Abhängigkeit der Temperatur [°C]. Der Anteil des Schnellgelierers in den Weichmachermischungen ist so gewählt, dass die Geliertemperatur von DINP (Palatinol® N) erreicht wird. Zusätzlich ist als Vergleich das Gelierverhalten von PVC-Plastisolen dargestellt, die ausschließlich die kommerziell erhältlichen Weichmacher DOTP (Eastman 168™) oder DINP (Palatinol® N) enthalten. Der Gesamtweichmachergehalt der Plastisole beträgt 100 phr.
Figur 3:

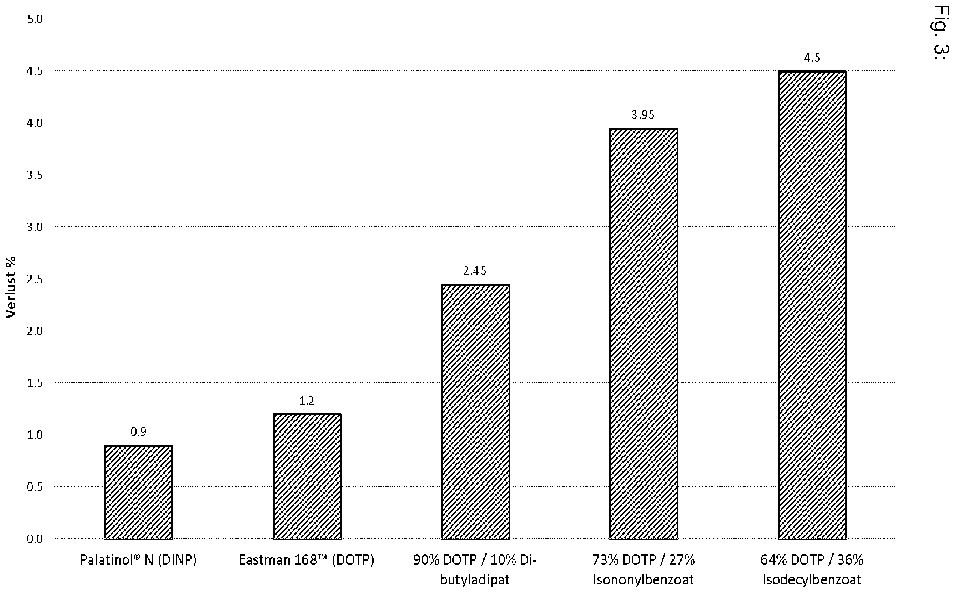

   Figur 3 zeigt die Prozessflüchtigkeit von PVC Plastisolen, enthaltend 60 phr der erfindungsgemäßen Weichmacher-Zusammensetzung sowie verschiedene Abmischungen von DOTP (Eastman 168™) mit den kommerziell erhältlichen Schnellgelierern INB (Vestinol® INB) oder IDB (Jayflex® MB 10). Dargestellt ist der Gewichtsverlust der Plastisole in % nach einer Gelierzeit von 2 Minuten bei 190 °C. Zusätzlich ist die Prozessflüchtigkeit von PVC-Plastisolen dargestellt, die ausschließlich die kommerziell erhältlichen Weichmacher DOTP (Eastman 168™) oder DINP (Palatinol® N) enthalten.
Figur 4:

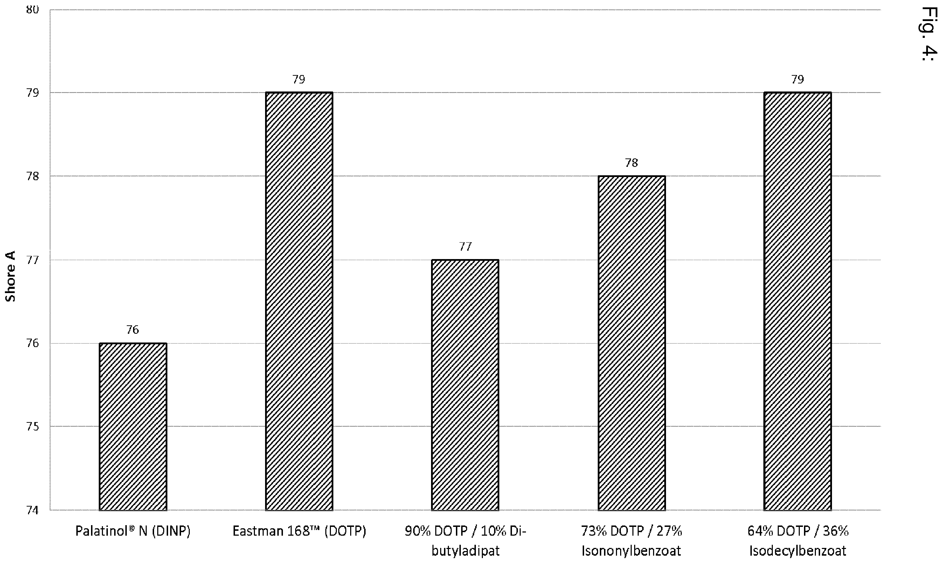

   Figur 4 zeigt die Shore A Härte von PVC-Folien, die aus PVC Plastisolen, enthaltend 60 phr der erfindungsgemäßen Weichmacher-Zusammensetzung sowie verschiedene Abmischungen von DOTP (Eastman 168™) mit den kommerziell erhältlichen Schnellgelierern INB (Vestinol® INB) oder IDB (Jayflex® MB 10), hergestellt wurden. Zusätzlich ist die Shore A Härte von Folien dargestellt, die aus PVC Plastisolen, enthaltend ausschließlich die kommerziell erhältlichen Weichmacher DOTP (Eastman 168™) oder DINP (Palatinol® N), hergestellt wurden. Die Shore A Härte-Messung erfolgte gemäß DIN EN ISO 868 vom Oktober 2003 nach einer Messzeit von jeweils 15 Sekunden.
Figur 5:

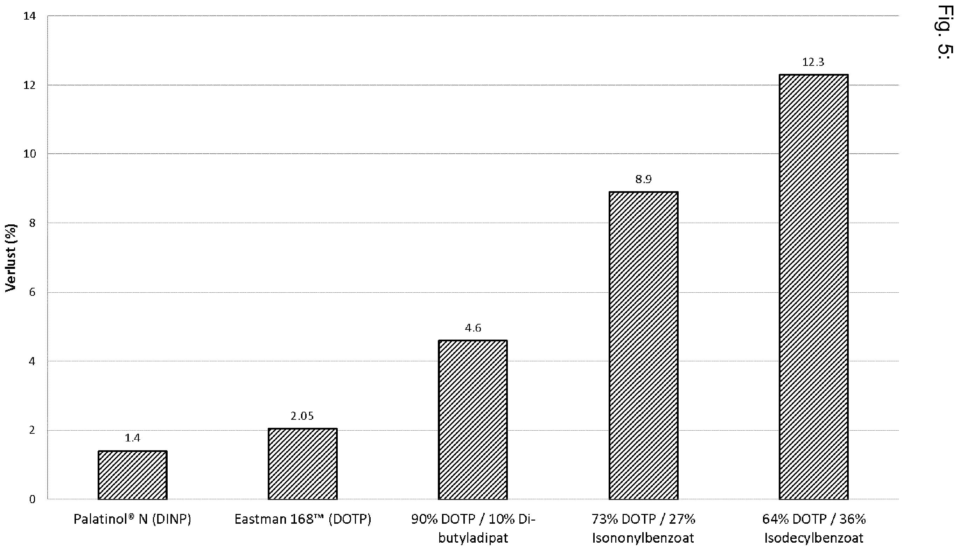

   Figur 5 zeigt die Folienflüchtigkeit von PVC-Folien, die aus Plastisolen, enthaltend 60 phr der erfindungsgemäß eingesetzten Weichmacher-Zusammensetzung sowie verschiedene Abmischungen von DOTP (Eastman 168™) mit den kommerziell erhältlichen Schnellgelierern INB (Vestinol® INB) oder IDB (Jayflex® MB 10), hergestellt wurden. Dargestellt ist der Gewichtsverlust der PVC-Folien in %. Zusätzlich ist die Folienflüchtigkeit von PVC-Folien dargestellt, die aus Plastisolen hergestellt wurden, die ausschließlich die kommerziell erhältlichen Weichmacher DOTP (Eastman 168™) oder DINP (Palatinol® N) enthalten.
Figur 6:

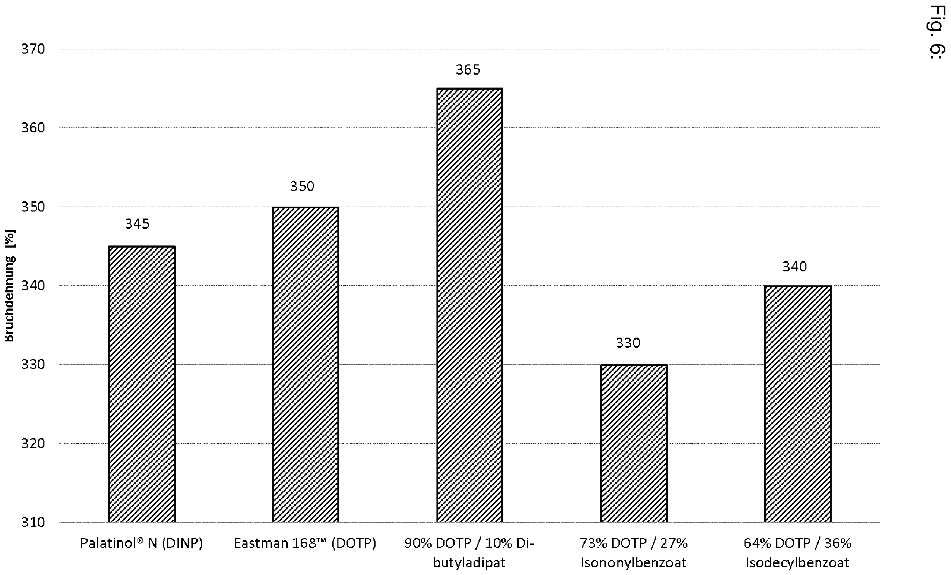

   Figur 6 zeigt die Bruchdehnung von PVC-Folien, die aus Plastisolen, enthaltend 60 phr der erfindungsgemäß eingesetzten Weichmacher-Zusammensetzung sowie verschiedene Abmischungen von DOTP (Eastman 168™) mit den kommerziell erhältlichen Schnellgelierern INB (Vestinol® INB) oder IDB (Jayflex® MB 10), hergestellt wurden.
Figur 7:

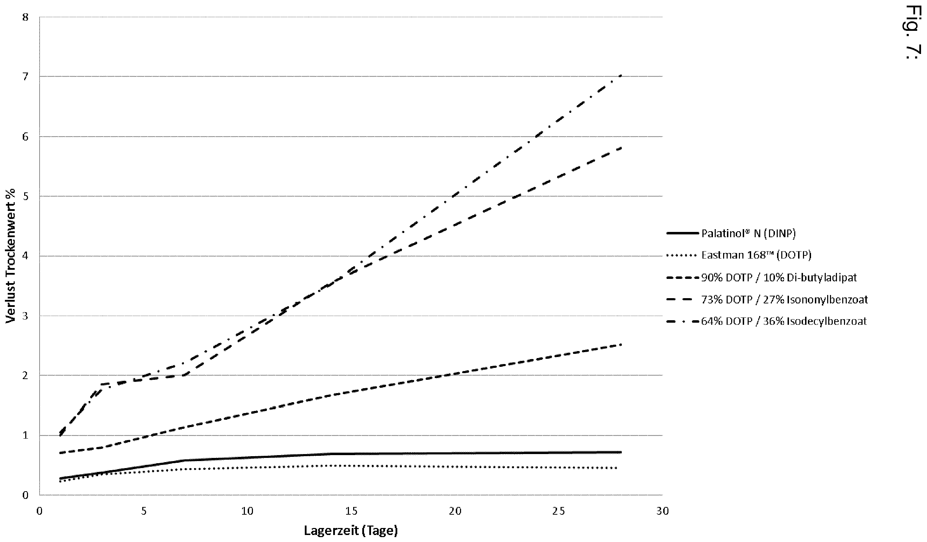

   Figur 7 zeigt die Lagerstabilität von PVC-Folien, die aus Plastisolen, enthaltend 60 phr der erfindungsgemäß eingesetzten Weichmacher-Zusammensetzung sowie verschiedene Abmischungen von DOTP (Eastman 168™) mit den kommerziell erhältlichen Schnellgelierern INB (Vestinol® INB) oder IDB (Jayflex® MB 10), hergestellt wurden. Dargestellt ist der Verlust an Trockengewicht [%] in Abhängigkeit der Lagerzeit [d].

### BEISPIELE

In den Beispielen werden folgende Einsatzstoffe verwendet:

| **Einsatzstoff** | **Hersteller** |
|---|---|
| Homopolymeres Emulsions-PVC, Markenname Solvin® 367 NC | SolVin SA, Brussels, Belgium |
| Homopolymeres Emulsions-PVC, Markenname Vinnolit® P 70 | Vinnolit GmbH, Ismaning, Germany |
| Isononylbenzoat (Abkürzung: INB), Markenname Vestinol® INB | Evonik, Marl, Germany |
| Isodecylbenzoat (Abkürzung: IDB), Markenname Jayflex® MB 10 | Exxonmobil Chemical Belgium, Antwerpen, Belgium |
| Di-(2-ethylhexyl)-terephthalat (Abk.: DOTP), Markenname Eastman 168™ | Eastman Chemical B.V., Capelle aan den Ijssel, The Netherlands |
| Diisononylphthalat (Abkürzung: DINP), Markenname Palatinol® N | BASF SE, Ludwigshafen, Deutschland |
| Ba-Zn Stabilisator, Markenname Reagens® SLX/781 | Reagens S.p.A., Bologna, Italy |

### I) Herstellung einer erfindungsgemäß eingesetzten Verbindung (I):

### Beispiel 1

### Synthese von Di-(n-butyl)-adipat (Abkürzung: DBA) durch direkte Veresterung

In einem 2 L Rundhalskolben, ausgestattet mit einem Dean-Stark Wasserabscheider und einem Tropftrichter mit Druckausgleich, wurden 445 g (6,00 mol, 4,0 Äquivalente) n-Butanol in 500 g Toluol vorgelegt. Die Mischung wurde unter Rühren bis zum Rückfluss erhitzt und 219 g (1,50 mol, 1,0 Äquivalente) Adipinsäure gefolgt von 11,5 g (0,12 mol, 8 mol-%) 99,9%iger Schwefelsäure in 3 bis 4 Portionen zugegeben, wann immer sich die Umsetzung verlangsamte. Der Reaktionsverlauf wurde anhand der Menge an abgeschiedenem Wasser in der Dean-Stark-Apparatur verfolgt. Nach vollständigem Umsatz wurde dem Reaktionsgemisch eine Probe entnommen und mittels GC analysiert. Die Reaktionsmischung wurde auf Raumtemperatur abgekühlt, in einen Scheidetrichter überführt und zweimal mit gesättigter NaHCO₃-Lösung gewaschen. Die organische Phase wurde mit gesättigter Kochsalzlösung gewaschen, mit wasserfreiem Na₂SO₄ getrocknet und das Lösungsmittel unter reduziertem Druck entfernt. Das Rohprodukt wurde mittels fraktionierter Destillation gereinigt.

Das so erhaltene Di-n-butyladipat besitzt eine Dichte von 0,960 g/cm³ (ermittelt nach DIN 51757), eine Viskosität von 6,0 mPa*s (nach DIN 51562), einen Brechungsindex n_{D}²⁰ von 1,4350 (nach DIN 51423), eine Säurezahl von 0,03 mg KOH/g (nach DIN EN ISO 2114), einen Wassergehalt von 0,02 % (nach DIN 51777, Teil 1) und eine Reinheit nach GC von 99,86 %.

### II) Anwendungstechnische Prüfungen:

### II.a) Bestimmung der Lösetemperatur nach DIN 53408:

Zur Charakterisierung des Gelierverhaltens der erfindungsgemäß eingesetzten Verbindungen (I) in PVC wurde die Lösetemperatur nach DIN 53408 bestimmt. Nach DIN 53408 wird ein Tropfen einer Aufschlämmung von 1 g PVC in 19 g Weichmacher unter einem mit einem heizbaren Mikroskoptisch ausgestatteten Mikroskop im durchscheinenden Licht beobachtet. Die Temperatur wird dabei ab 60 °C linear um 2 °C pro Minute erhöht. Als Lösetemperatur gilt die Temperatur, bei welcher die PVC-Teilchen unsichtbar werden, d. h. deren Konturen und Kontraste nicht mehr zu erkennen sind. Je niedriger die Lösetemperatur, desto besser ist das Gelierverhalten der betreffenden Substanz für PVC.

In der nachfolgenden Tabelle sind die Lösetemperaturen des erfindungsgemäß eingesetzten Weichmachers Di-n-butyladipat und als Vergleich die Lösetemperaturen der kommerziell erhältlichen Schnellgelierer Isononylbenzoat (INB), Markenname Vestinol® INB, Isodecylbenzoat (IDB), Markenname Jayflex® MB 10, die kommerziell erhältlichen Weichmacher Di-(2-ethylhexyl)-terephthalat (DOTP), Markenname Eastman 168™, und Diisononylphthalat (DINP), Markenname Palatinol® N, aufgeführt.

| Bsp.-Nr. | Substanz | Lösetemperatur nach DIN 53408 |
|---|---|---|
| | | [°C] |
| 1 | Di-(n-butyl)-adipat | 119 |
| V1 | Vestinol® INB | 128 |
| V2 | Jayflex® MB 10 | 131 |
| V3 | Eastman 168™ | 144 |
| V4 | Palatinol® N | 131 |

Wie aus der Tabelle ersichtlich, zeigt der erfindungsgemäß eingesetzte Schnellgelierer Di-n-butyladipat eine deutlich niedrigere Lösetemperatur für PVC als die beiden kommerziell erhältlichen Schnellgelierer INB (Vestinol® INB) und IDB (Jayflex® MB 10) oder die beiden kommerziell erhältlichen Weichmachern DOTP (Eastman 168™) und DINP (Palatinol® N).

### Il.b) Bestimmung des Gelierverhaltens von PVC-Plastisolen enthaltend die erfindungsgemäße Weichmacherzusammensetzung:

Zur Untersuchung des Gelierverhaltens von PVC-Plastisolen auf Basis der erfindungsgemäßen Weichmacher-Zusammensetzungen wurden PVC-Plastisole, die Mischungen des kommerziell erhältlichen Weichmacher DOTP (Eastman 168™) mit dem Schnellgelierer DBA (Di-n-butyladipat) (8 und 10 Gew.-% Di-n-butyladipat, bezogen auf die eingesetzte Weichmacher-Zusammensetzung) enthalten, nach folgender Rezeptur hergestellt:

| **Einsatzstoff** | **Anteil [phr]** |
|---|---|
| PVC (Mischung aus 70 Gewichtsteilen Homopolymeres Emulsions-PVC, Markenname Solvin® 367 NC, und 30 Gewichtsteilen Homopolymeres Emulsions-PVC, Markenname Vinnolit® P 70) | 100 |
| Erfindungsgemäße Weichmacher-Zusammensetzung | 100 |
| Ba-Zn Stabilisator, Typ Reagens® SLX/781 | 2 |

Als Vergleich wurden zudem Plastisole hergestellt, die ausschließlich die kommerziell erhältlichen Weichmacher DOTP (Eastman 168™) oder DINP (Palatinol® N) enthalten.

Die Herstellung der Plastisole erfolgte in der Weise, dass die zwei PVC-Typen in einem PE- (Polyethylen-) Becher zusammen eingewogen wurden. In einen zweiten PE-Becher wurden die flüssigen Komponenten eingewogen. Mit Hilfe eines Dissolvers (Fa. Jahnke & Kunkel, IKA-Werk, Typ RE-166 A, 60-6000 1/min, Durchmesser Dissolverscheibe = 40 mm) wurde bei 400 U/min das PVC in die flüssigen Komponenten eingerührt. Nachdem ein Plastisol entstanden war, wurde die Drehzahl auf 2500 1/min erhöht und 150 s homogenisiert. Das Plastisol wurde aus dem PE-Becher in eine Stahlschale überführt und diese in einem Exsikkator einem Druck von 10 mbar ausgesetzt. Dadurch soll die in dem Plastisol enthaltene Luft entfernt werden. Je nach Luftgehalt bläht sich das Plastisol mehr oder weniger stark auf. In diesem Stadium wird durch Schütteln des Exsikkators die Oberfläche des Plastisols zerstört und zum kollabieren gebracht. Ab diesem Zeitpunkt wird das Plastisol noch 15 min in dem Exsikkator bei einem Druck von 10 mbar belassen. Danach wird die Vakuumpumpe abgeschaltet, der Exsikkator belüftet und das Plastisol wieder in den PE-Becher überführt. Das Plastisol ist nun bereit für die rheologischen Messungen. Messbeginn war bei allen Plastisolen 30 min nach der Homogenisierung.

Um ein flüssiges PVC-Plastisol zu gelieren und vom Zustand homogen in Weichmacher dispergierter PVC-Partikel in eine homogene, feste Weich-PVC-Matrix zu überführen, muss die dafür notwendige Energie in Form von Wärme zugeführt werden. In einem Verarbeitungsprozess stehen dafür die Parameter Temperatur und Verweilzeit zur Verfügung. Je schneller die Gelierung abläuft (Indiz ist hier die Lösetemperatur, d. h. je niedriger diese ist, desto schneller geliert das Material), umso geringer kann die Temperatur (bei gleicher Verweilzeit) oder die Verweilzeit (bei gleicher Temperatur) gewählt werden.

Die Untersuchung des Gelierverhaltens eines Plastisols erfolgt nach interner Methode mit einem Rheometer MCR101 der Firma Anton Paar. Gemessen wird hierbei die Viskosität der Paste unter Aufheizen bei konstanter, geringer Scherung (Oszillation). Für die Oszillationsversuche wurden folgende Parameter verwendet:

| Messsystem: | Parallele Platten, 50 mm Durchmesser |
|---|---|
| Amplitude (gamma): | 1% |
| Frequenz: | 1 Hz |
| Spaltbreite: | 1 mm |
| Ausgangstemperatur: | 20°C |
| Temperaturprofil: | 20°C - 200°C |
| Heizrate: | 10°C/min |
| Anzahl Messpunkte: | 201 |
| Messdauer der einzelnen Messpunkte: | 0.09 min |

Die Messung erfolgte in zwei Schritten. Der erste Schritt dient lediglich der Temperierung der Probe. Bei 20°C wird das Plastisol für 2 min bei konstanter Amplitude (gamma = 1%) leicht geschert. Im zweiten Schritt beginnt das Temperaturprogramm. Bei der Messung werden der Speichermodul und der Verlustmodul aufgezeichnet. Aus diesen beiden Größen wird die komplexe Viskosität η* errechnet. Die Temperatur, bei der das Maximum der komplexen Viskosität erreicht ist, wird als die Geliertemperatur des Plastisols bezeichnet.

Wie in der Figur 1 sehr gut zu erkennen ist, gelieren die PVC-Plastisole mit der erfindungsgemäßen Weichmacher-Zusammensetzung im Vergleich zu dem PVC-Plastisol, welches ausschließlich den kommerziell erhältlichen Weichmacher DOTP (Eastman 168™) enthält, bei signifikant niedrigeren Temperaturen. Bereits bei einer Zusammensetzung von 90 % DOTP (Eastman 168™) und 10 % DBA (Di-n-butyladipat) wird eine Geliertemperatur von 150 °C erreicht, die der Geliertemperatur des kommerziell erhältlichen Weichmachers DINP (Palatinol® N) entspricht und die für viele Plastisolanwendungen ausreichend ist. Durch die Erhöhung des Anteils des Schnellgelierers DBA (Di-n-butyladipat) in der Weichmacherzusammensetzung kann die Geliertemperatur des Plastisols weiter merklich erniedrigt werden.

### II.c) Bestimmung des Gelierverhaltens von PVC-Plastisolen auf Basis der erfindungsgemäßen Weichmacher-Zusammensetzung im Vergleich zu PVC-Plastisolen, die herkömmliche Schnellgelierer enthalten:

Um das Gelierverhaltens von PVC-Plastisolen, die die erfindungsgemäßen Weichmacher-Zusammensetzungen enthalten, mit PVC-Plastisolen, die Weichmacher-Zusammensetzungen aus herkömmlichen Schnellgelierern enthalten, zu vergleichen, wurde analog der in II.b) beschriebenen Methode vorgegangen. Dabei wurde zunächst für die herkömmlichen Schnellgelierer Isononylbenzoat (Vestinol® INB) und Isodecylbenzoat (Jayflex® MB 10) das Mischungsverhältnis mit dem kommerziell erhältlichen Weichmacher DOTP (Eastman 168™) ermittelt, welches eine Geliertemperatur von 150 °C bewirkt, der Geliertemperatur des kommerziell erhältlichen Weichmachers DINP (Palatinol® N).

Für Vestinol® INB liegt dieses Mischungsverhältnis bei 27 % Vestinol® INB und 73 % Eastman 168™ und für Jayflex® MB 10 bei 36% Jayflex® MB 10 und 64 % Eastman 168™.

In Figur 2 sind die Gelierkurven der PVC-Plastisole mit Weichmacher-Zusammensetzungen aus den kommerziell erhältlichen Schnellgelierern Vestinol® INB und Jayflex® MB im Vergleich zu den Gelierkurven der PVC-Plastisole, enthaltend die erfindungsgemäßen Weichmacher-Zusammensetzungen, zusammengestellt. Als Vergleich sind zudem die Gelierkurven der PVC-Plastisole enthalten, die ausschließlich die kommerziell erhältlichen Weichmacher Eastman 168™ oder Palatinol® N enthalten. Aus der Figur 2 ist sehr gut ersichtlich, dass in den erfindungsgemäßen Weichmacher-Zusammensetzungen bereits ein Anteil des erfindungsgemäßen Schnellgelierers DBA (Di-n-butyladipat) von nur 10 % ausreicht, um eine Geliertemperatur von 150 °C zu erzielen, die der Geliertemperatur des kommerziell erhältlichen Weichmachers DINP (Palatinol® N) entspricht und die für viele Plastisolanwendungen ausreichend ist. Hingegen werden bei den Weichmacher-Zusammensetzungen enthaltend die herkömmlichen Schnellgelierer INB (Vestinol® INB) oder IDB (Jayflex® MB), wesentlich höhere Anteile von 27 % INB (Vestinol® INB) bzw. 36 % IDB (Jayflex® MB) benötigt, um eine Geliertemperatur der Plastisole von 150 °C zu erzielen. Der erfindungsgemäß eingesetzte Schnellgelierer DBA (Di-n-butyladipat) besitzt demnach eine deutlich bessere Gelierwirkung als die herkömmlichen Schnellgelierer INB (Vestinol® INB) und IDB (Jayflex® MB 10).

### II.d) Bestimmung der Prozessflüchtigkeit der erfindungsgemäßen Weichmacher-Zusammensetzungen im Vergleich zu Weichmacher-Zusammensetzungen mit herkömmlichen Schnellgelierern

Unter der Prozessflüchtigkeit versteht man den Gewichtsverlust an Weichmacher während der Verarbeitung von Plastisolen. Wie unter II.c) beschrieben wurden Plastisole hergestellt, enthaltend die erfindungsgemäße Weichmacher-Zusammensetzung aus 10 % des Schnellgelierers DBA (Di-n-butyladipat) und 90 % des kommerziell erhältlichen Weichmachers DOTP (Eastman 168™), eine Weichmacher-Zusammensetzung aus 27 % des kommerziell erhältlichen Schnellgelierers INB (Vestinol® INB) und 73 % des kommerziell erhältlichen Weichmachers DOTP (Eastman 168™) sowie 36 % des kommerziell erhältlichen Schnellgelierers IDB (Jayflex® MB 10) und 64 % des kommerziell erhältlichen Weichmachers DOTP (Eastman 168™). Es wurde folgende Rezeptur verwendet.

| **Einsatzstoff** | **Anteil [phr]** |
|---|---|
| PVC (Mischung aus 70 Gewichtsteilen Homopolymeres Emulsions-PVC, Markenname Solvin® 367 NC, und 30 Gewichtsteilen Homopolymeres Emulsions-PVC, Markenname Vinnolit® P 70) | 100 |
| Weichmacher-Zusammensetzung | 60 |
| Ba-Zn Stabilisator, Typ Reagens® SLX/781 | 2 |

Als Vergleich wurden zudem Plastisole hergestellt, die ausschließlich die kommerziell erhältlichen Weichmacher DOTP (Eastman 168™) oder DINP (Palatinol® N) enthalten.

### Herstellung einer Vorfolie:

Um an den Plastisolen anwendungstechnische Eigenschaften bestimmen zu können, muss das flüssige Plastisol in eine verarbeitbare, feste Folie überführt werden. Dazu wird das Plastisol bei niedriger Temperatur vorgeliert.

Die Gelierung der Plastisole erfolgte in einem Mathisofen.

### Einstellungen am Mathisofen:

- Abluft: Klappe ganz offen
- Frischluft: offen
- Umluft: maximale Position
- Oberluft/Unterluft: Oberluft Stellung 1

### Herstellprozedur:

Es wurde ein neues Relaispapier in die Einspannvorrichtung am Mathisofen eingespannt. Der Ofen wird auf 140°C vorgeheizt und die Gelierzeit auf 25 s eingestellt. Für die Spalteinstellung wird der Spalt zwischen Papier und Rakel mit der Dickenschablone auf 0,1 mm eingestellt. Die Dickenmessuhr wird auf 0,1 mm gestellt. Dann wird der Spalt auf einen Wert von 0,7 mm auf der Messuhr eingestellt. Das Plastisol wird auf das Papier aufgetragen und mit dem Rakel glattgestrichen. Anschließend wird über den Startknopf die Einspannvorrichtung in den Ofen gefahren. Nach 25 s fährt die Einspannvorrichtung wieder aus dem Ofen. Das Plastisol ist geliert und die entstandene Folie lässt sich soeben in einem Stück von dem Papier abziehen. Die Dicke dieser Folie beträgt ca. 0,5 mm.

### Bestimmung der Prozessflüchtigkeit:

Zur Bestimmung der Prozessflüchtigkeit werden mit einem Shore-Härte-Stanzeisen aus der Vorfolie je 3 quadratische Probekörper (49 x 49 mm) ausgestanzt, gewogen und anschließend 2 Minuten bei 190°C im Mathisofen geliert. Nach dem Abkühlen werden diese Probekörper zurückgewogen und der Gewichtsverlust in % errechnet. Die Probekörper wurden dazu immer exakt auf der gleichen Stelle des Relaispapiers positioniert.

Wie aus Figur 3 sehr gut ersichtlich, ist die Prozessflüchtigkeit der erfindungsgemäßen Weichmacher-Zusammensetzung aus 10 % DBA (Di-n-butyladipat) und 90 % DOTP (Eastman 168™) deutlich niedriger als die Prozessflüchtigkeit der Weichmacher-Zusammensetzungen aus 27 % INB (Vestinol® INB) und 73 % DOTP (Eastman 168™) sowie 36 % IDB (Jayflex® MB) und 64 % DOTP (Eastman 168™). Bei der Verarbeitung der Plastisole auf Basis der erfindungsgemäßen Weichmacher-Zusammensetzungen geht also deutlich weniger Weichmacher verloren.

Die Prozessflüchtigkeit der erfindungsgemäßen Weichmacher-Zusammensetzung aus 10 % DBA (Di-n-butyladipat) und 90 % DOTP (Eastman 168™) ist allerdings höher als die der reinen Weichmacher DOTP (Eastman 168™) bzw. DINP (Palatinol® N).

### II.e) Bestimmung der Shore A-Härte von Folien hergestellt aus Plastisolen, enthaltend die erfindungsgemäßen Weichmacher-Zusammensetzungen, im Vergleich zu Folien hergestellt aus Plastisolen, enthaltend Weichmacher-Zusammensetzungen mit herkömmlichen Schnellgelierern

Die Shore A-Härte ist ein Maß für die Elastizität von weichgemachten PVC-Artikeln. Je niedriger die Shore-Härte, desto höher die Elastizität der PVC-Artikel.

Für die Bestimmung der Shore A Härte wurden wie unter II.d) beschrieben 49 x 49 mm große Folienstücke aus den Vorfolien ausgestanzt und analog der Flüchtigkeitsprüfung jeweils im Dreierpack 2 min bei 190°C geliert. Insgesamt wurden so 27 Stück Folien geliert. Diese 27 Stücke wurden im Pressrahmen übereinander gelegt und bei 195°C zu einem 10 mm dicken Shore-Klotz gepresst.

### Beschreibung der Shore-Härte Messung:

- Methode: DIN EN ISO 868, Okt. 2003
- Verwendetes Gerät: Digital Durometer Modell DD-3 der Firma Hildebrand
- Probekörper: 49mm x 49mm x 10mm (Länge x Breite x Dicke); gepresst aus ca. 27 Stück 0,5mm dicken Gelierfolien bei einer Temperatur von 195°C
- Lagerzeit der Probekörper vor der Messung: 7 Tage im Klimaraum bei 23°C und 50% rel. Luftfeuchtigkeit
- Messzeit: 15 s
- Es werden 10 Einzelwerte gemessen und daraus der Mittelwert berechnet

Wie aus Figur 4 sehr gut ersichtlich, ist die Shore A-Härte der Folie aus dem Plastisol mit der erfindungsgemäßen Weichmacher-Zusammensetzung aus 10 % DBA (Di-n-butyladipat) und 90 % DOTP (Eastman 168™) deutlich niedriger als die die Shore A-Härte der Folien aus den Plastisolen mit den Weichmacher-Zusammensetzungen aus 27 % INB (Vestinol® INB) und 73 % DOTP (Eastman 168™) sowie 36 % IDB (Jayflex® MB) und 64 % DOTP (Eastman 168™). Die Verwendung der erfindungsgemäßen Weichmacher-Zusammensetzungen führt also zu einer höheren Elastizität der PVC-Artikel.

Die Shore A-Härte der Folie aus dem Plastisol mit der erfindungsgemäßen Weichmacher-Zusammensetzung aus 10 % DBA (Di-n-butyladipat) und 90 % DOTP (Eastman 168™) ist darüber hinaus auch deutlich niedriger als die Shore A-Härte der Folie aus dem Plastisol mit dem reinen Weichmacher DOTP (Eastman 168™), aber etwas höher als die Shore A-Härte der Folie aus dem Plastisol mit dem reinen Weichmacher DINP (Palatinol® N).

### II.f) Bestimmung der Folienflüchtigkeit von Folien, hergestellt aus Plastisolen enthaltend erfindungsgemäße Weichmacher-Zusammensetzungen, im Vergleich zu Folien, hergestellt aus Plastisolen enthaltend Weichmacher-Zusammensetzungen mit herkömmlichen Schnellgelierern

Die Folienflüchtigkeit ist ein Maß für die Flüchtigkeit eines Weichmachers im fertigen, weichgemachten PVC-Artikel. Für die Prüfung der Folienflüchtigkeit wurden, wie unter II.c) beschrieben, Plastisole, enthaltend die erfindungsgemäßen Weichmacher-Zusammensetzung aus 10 % des Schnellgelierers DBA (Di-n-butyladipat) und 90 % des kommerziell erhältlichen Weichmachers DOTP (Eastman 168™), eine Weichmacher-Zusammensetzungen aus 27 % des kommerziell erhältlichen Schnellgelierers INB (Vestinol® INB) und 73 % des kommerziell erhältlichen Weichmachers DOTP (Eastman 168™) sowie eine Weichmacher-Zusammensetzungen aus 36 % des kommerziell erhältlichen Schnellgelierers IDB (Jayflex® MB 10) und 64 % des kommerziell erhältlichen Weichmachers DOTP (Eastman 168™), hergestellt. Als Vergleich wurden zudem Plastisole hergestellt, die ausschließlich die kommerziell erhältlichen Weichmacher DOTP (Eastman 168™) oder DINP (Palatinol® N) enthalten. Für die Prüfungen wurde hier aber nicht erst eine Vorfolie hergestellt, sondern das Plastisol wurde direkt 2 min bei 190°C im Mathisofen geliert. An den so erhaltenen ca. 0,5 mm dicken Folien wurde die Prüfung der Folienflüchtigkeit durchgeführt.

### Prüfung der Folienflüchtigkeit über 24h bei 130°C:

Für die Bestimmung der Folienflüchtigkeit werden aus den 2 min bei 190°C gelierten Plastisolen vier Einzelfolien (150 x 100 mm) ausgeschnitten, gelocht und gewogen. Die Folien werden an einen rotierenden Stern in einen auf 130°C eingestellten HeraeusTrockenschrank Typ 5042 E gehängt. In dem Schrank wird 18-mal pro Stunde die Luft gewechselt. Dies entspricht 800l/h Frischluft. Nach 24h in dem Schrank werden die Folien entnommen und zurückgewogen. Der Gewichtsverlust in Prozent gibt die Folienflüchtigkeit der Weichmacher-Zusammensetzungen an.

Wie aus Figur 5 sehr gut ersichtlich, ist die Folienflüchtigkeit der erfindungsgemäßen Weichmacher-Zusammensetzung aus 10 % DBA (Di-n-butyladipat) und 90 % DOTP (Eastman 168™) deutlich niedriger als die Folienflüchtigkeit der Weichmacher-Zusammensetzungen aus 27 % INB (Vestinol® INB) und DOTP (73 % Eastman 168™) sowie 36 % IDB (Jayflex® MB) und 64 % DOTP (Eastman 168™). Bei PVC-Folien, die die erfindungsgemäßen Weichmacher-Zusammensetzungen enthalten, entweicht also im fertigen, weichgemachten PVC-Artikel weniger Weichmacher.

Die Folienflüchtigkeit der erfindungsgemäßen Weichmacher-Zusammensetzung aus 10 % DBA (Di-n-butyladipat) und 90 % DOTP (Eastman 168™) ist allerdings höher als die der reinen Weichmacher DOTP (Eastman 168™) bzw. DINP (Palatinol® N).

### II.g) Bestimmung der mechanischen Eigenschaften von Folien, hergestellt aus Plastisolen enthaltend die erfindungsgemäße Weichmacher-Zusammensetzung, im Vergleich zu Folien, hergestellt aus Plastisolen enthaltend Weichmacher-Zusammensetzungen mit herkömmlichen Schnellgelierern

Die mechanischen Eigenschaften von weichgemachten PVC-Artikeln werden beispielsweise mit Hilfe des Parameters Bruchdehnung charakterisiert. Je höher dieser Wert, desto besser die mechanischen Eigenschaften des weichgemachten PVC-Artikels.

Für die Prüfung der mechanischen Eigenschaften wurden, wie unter II.c) beschrieben, Plastisole, enthaltend erfindungsgemäße Weichmacher-Zusammensetzung aus 10 % des Schnellgelierers DBA (Di-n-butyladipat) und 90 % des kommerziell erhältlichen Weichmachers DOTP (Eastman 168™), eine Weichmacher-Zusammensetzung aus 27 % des Schnellgelierers INB (Vestinol® INB) und 73 % DOTP (Eastman 168™) sowie eine Weichmacher-Zusammensetzung aus 36 % des Schnellgelierers IDB (Jayflex® MB 10) und 64 % DOTP (Eastman 168™), hergestellt. Als Vergleich wurden zudem Plastisole hergestellt, die ausschließlich die kommerziell erhältlichen Weichmacher DOTP (Eastman 168™) oder DINP (Palatinol® N) enthalten. Für die Prüfungen wurde hier aber nicht erst eine Vorfolie hergestellt, sondern das Plastisol wurde direkt 2 min bei 190°C im Mathisofen geliert. An den so erhaltenen ca. 0,5 mm dicken Folien wurde die Prüfung der mechanischen Eigenschaften durchgeführt.

### Bestimmung der Bruchdehnung:

- Methode: Prüfung nach DIN EN ISO 527 Teil 1 und Teil 3
- Maschine: Zwicki Typ TMZ 2.5/TH1S
- Probekörper: Folienstreifen Typ 2 nach DIN EN ISO 527 Teil 3, 150 mm lang, 15 mm breit, ausgestanzt
- Anzahl Probekörper pro Prüfung: 10 Proben
- Klima: Normklima 23°C (+- 1°C), 50% relative Luftfeuchtigkeit
- Lagerzeit der Probekörper vor der Messung: 7 Tage im Normklima
- Klemmen: Glatt-Konvex mit 6 bar Klemmendruck
- Einspannlänge: 100 mm
- Messlänge (= Einspannlänge): 100 mm
- Prüfgeschwindigkeit: 100 mm/min

Wie aus Figur 6 sehr gut ersichtlich, ist der Wert der Bruchdehnung für die Folie, hergestellt aus dem Plastisol enthaltend 10 % DBA (Di-n-butyladipat) und 90 % DOTP (Eastman 168™), deutlich höher als die Werte für die Folien, hergestellt aus den Plastisolen enthaltend 27 % INB (Vestinol® INB) und 73 % DOTP (Eastman 168™) sowie 36 % IDB (Jayflex® MB) und 64 % DOTP (Eastman 168™), als auch die Werte für die Folien, hergestellt aus den Plastisolen, die ausschließlich die reinen Weichmacher DOTP (Eastman 168™) und DINP (Palatinol® N) enthalten.

### Il.h) Bestimmung der Verträglichkeit (Permanenz) von Folien, hergestellt aus Plastisolen enthaltend die erfindungsgemäße Weichmacher-Zusammensetzung, im Vergleich zu Folien, hergestellt aus Plastisolen enthaltend Weichmacher-Zusammensetzungen mit herkömmlichen Schnellgelierern

Die Verträglichkeit (Permanenz) von Weichmachern in weichgemachten PVC-Artikeln charakterisiert, in welchem Ausmaß Weichmacher während des Gebrauchs der weichgemachten PVC-Artikel zum Ausschwitzen neigen und dadurch die Gebrauchseigenschaften des PVC-Artikels beeinträchtigen.

Für die Prüfung der Verträglichkeit (Permanenz) wurden, wie unter II.c) beschrieben, Plastisole, enthaltend erfindungsgemäße Weichmacher-Zusammensetzung aus 10 % des Schnellgelierers DBA (Di-n-butyladipat) und 90 % des kommerziell erhältlichen Weichmachers DOTP (Eastman 168™), eine Weichmacher-Zusammensetzung aus 27 % des Schnellgelierers INB (Vestinol® INB) und 73 % DOTP (Eastman 168™) sowie eine Weichmacher-Zusammensetzung aus 36 % des Schnellgelierers IDB (Jayflex® MB 10) und 64 % DOTP (Eastman 168™), hergestellt. Als Vergleich wurden zudem Plastisole hergestellt, die ausschließlich die kommerziell erhältlichen Weichmacher DOTP (Eastman 168™) oder DINP (Palatinol® N) enthalten. Für die Prüfungen wurde hier aber nicht erst eine Vorfolie hergestellt, sondern das Plastisol wurde direkt 2 min bei 190°C im Mathisofen geliert. An den so erhaltenen ca. 0,5 mm dicken Folien wurde die Prüfung der mechanischen Eigenschaften durchgeführt.

### Prüfmethode:

### Zweck des Prüfverfahrens:

Die Prüfung dient zur qualitativen und quantitativen Messung der Verträglichkeit von Weich- PVC- Rezepturen. Sie wird bei erhöhter Temperatur (70 °C) und erhöhter Luftfeuchte (100 % relative Luftfeuchtigkeit) durchgeführt. Die erhaltenen Daten werden gegen die Lagerzeit ausgewertet.

### Probekörper:

Zur Standardprüfung werden je Rezeptur 10 Prüfkörper (Folien) mit einer Größe von 75 x 110 x 0,5 mm verwendet. Die Folien werden an der Breitseite gelocht, beschriftet und gewogen. Die Beschriftung muss wischfest sein und kann z. B. mit dem Lötkolben erfolgen.

### Prüfgeräte:

Wärmeschrank, Analysenwaage, Temperaturmessgerät mit Fühler zur Messung der Innenraumtemperatur des Wärmeschrankes, Becken aus Glas, Metallgestelle aus nichtrostendem Material;

| | |
|---|---|
| Prüftemperatur: | 70°C |
| Prüfmedium: | entstehender Wasserdampf bei 70°C aus vollentsalztem Wasser |

### Durchführung:

Es wird die Temperatur im Innenraum des Wärmeschrankes auf die geforderten 70 °C eingestellt. Die Prüffolien werden auf ein Drahtgestell aufgehängt und in eine Glaswanne, die etwa 5 cm hoch mit Wasser (VE-Wasser) gefüllt ist, hineingestellt. Es dürfen nur Folien gleicher Zusammensetzung in einem gekennzeichneten und nummerierten Becken gelagert werden, um Beeinflussung zu vermeiden und die Entnahme nach den jeweiligen Lagerzeiten zu erleichtern.

Die Glaswanne wird mit einer Polyethylen-Folie wasserdampfdicht (!) verschlossen, damit der später in der Glaswanne entstehende Wasserdampf nicht entweichen kann.

### Lagerzeit:

Nach 1-, 3, 7-, 14- und 28-Tagen-Lagerzeit werden jeweils 2 Folien (Doppelbestimmung) aus der Glaswanne entnommen und für 1 Std. frei hängend an der Luft klimatisiert. Danach wird die Folie im Abzug mit Methanol gereinigt (mit Methanol angefeuchtetes Handtuch) und gewogen (Naßwert). Anschließend wird die Folie für 16 h bei 70 °C in einem Trockenschrank (natürliche Konvektion) frei hängend getrocknet. Nach Entnahme aus dem Trockenschrank wird die Folie für 1 Std. im Labor frei hängend konditioniert und anschließend erneut gewogen (Trockenwert). Als Prüfergebnis angegeben wird jeweils der arithmetische Mittelwert der Gewichtsänderungen.

Wie aus Figur 7 sehr gut ersichtlich, ist das Ausschwitzverhalten der erfindungsgemäßen Weichmacher-Zusammensetzung aus 10 % DBA (Di-n-butyladipat) und 90 % DOTP (Eastman 168™) deutlich besser als das Ausschwitzverhalten der Weichmacher-Zusammensetzungen aus 27 % INB (Vestinol® INB) und 73 % DOTP (Eastman 168™) sowie 36 % IDB (Jayflex® MB) und 64 % DOTP (Eastman 168™), allerdings schlechter als das Ausschwitzverhalten der reinen Weichmacher DOTP (Eastman 168™) und DINP (Palatinol® N).

## Patentansprüche

1. Weichmacher-Zusammensetzung, enthaltend
a) wenigstens eine Verbindung der allgemeinen Formel (I),
R¹-O-C(=O)-X-C(=O)-O-R² (I)
worin
X für eine unverzweigte oder verzweigte C₂-C₈-Alkylengruppe oder eine unverzweigte oder verzweigte C₂-C₈-Alkenylengruppe, enthaltend wenigstens eine Doppelbindung, steht
und
R¹ und R² unabhängig voneinander ausgewählt sind unter C₃-C₅-Alkyl,
b) wenigstens eine Verbindung der allgemeinen Formel (II), 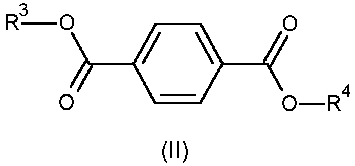 worin
R³ und R⁴ unabhängig voneinander ausgewählt sind unter verzweigten und unverzweigten C₄-C₁₂-Alkylresten.

2. Weichmacher-Zusammensetzung nach Anspruch 1, wobei in den Verbindungen der allgemeinen Formel (I) X für eine unverzweigte C₂-C₅-Alkylengruppe steht.

3. Weichmacher-Zusammensetzung nach Anspruch 1 und 2, wobei in den Verbindungen der allgemeinen Formel (I) R¹ und R² unabhängig voneinander für n-Butyl, Isobutyl, n-Pentyl, 2-Methylbutyl oder 3-Methylbutyl stehen.

4. Weichmacher-Zusammensetzung nach einem der vorangehenden Ansprüche, wobei in den Verbindungen der allgemeinen Formel (I) R¹ und R² beide für n-Butyl stehen.

5. Weichmacher-Zusammensetzung nach einem der vorangehenden Ansprüche, wobei in den Verbindungen der allgemeinen Formel (II) R³ und R⁴ beide für 2-Ethylhexyl, beide für Isononyl oder beide für 2-Propylheptyl stehen.

6. Weichmacher-Zusammensetzung nach einem der vorangehenden Ansprüche, wobei die Weichmacher-Zusammensetzung gegebenenfalls einen weiteren von den Verbindungen (I) und (II) verschiedenen Weichmacher enthält, der ausgewählt ist unter Phthalsäuredialkylestern, Phthalsäurealkylaralkylestern, Cyclohexan-1,2-dicarbonsäureestern, Cyclohexan-1,4-dicarbonsäureestern, Trimellitsäuretrialkylestern, Benzoesäurealkylestern, Dibenzoesäureestern von Glycolen, Hydroxybenzoesäureestern, Estern von gesättigten Monocarbonsäuren, von Verbindungen (I) verschiedenen Estern gesättigter Dicarbonsäuren, von Verbindungen (I) verschiedenen Estern ungesättigter Dicarbonsäuren, Amiden und Estern von aromatischen Sulfonsäuren, Alkylsulfonsäureestern, Glycerinestern, Isosorbidestern, Phosphorsäureestern, Citronensäuretriestern, Alkylpyrrolidonderivaten, 2,5-Furandicarbonsäureestern, 2,5-Tetrahydrofurandicarbonsäureestern, epoxidierten Pflanzenölen, epoxidierten Fettsäuremonoalkylestern, Polyestern aus aliphatischen und/oder aromatischen Polycarbonsäuren mit wenigstens zweiwertigen Alkoholen.

7. Weichmacher-Zusammensetzung nach einem der vorangehenden Ansprüche, wobei der Gehalt an Verbindungen der allgemeinen Formel (I) in der Weichmacher-Zusammensetzung 1 bis 70 Gew.-% beträgt.

8. Weichmacher-Zusammensetzung nach einem der vorangehenden Ansprüche, wobei der Gehalt an Verbindungen der allgemeinen Formel (II) in der Weichmacher-Zusammensetzung 30 bis 99 Gew.-% beträgt.

9. Weichmacher-Zusammensetzung nach einem der vorangehenden Ansprüche, wobei das Gewichtsverhältnis zwischen Verbindungen der allgemeinen Formel (I) und Verbindungen der allgemeinen Formel (II) im Bereich von 1 : 100 bis 2 : 1 liegt.

10. Formmasse, enthaltend wenigstens ein Polymer und eine Weichmacher-Zusammensetzung wie in einem der Ansprüche 1 bis 9 definiert.

11. Formmasse nach Anspruch 10, wobei es sich bei dem Polymer um ein thermoplastisches Polymer handelt, das ausgewählt ist unter
- Homo- oder Copolymeren, die wenigstens ein Monomer einpolymerisiert enthalten, das ausgewählt ist unter C₂-C₁₀-Monoolefinen, 1,3-Butadien, 2-Chlor-1,3-butadien, Vinylalkohol und dessen C₂-C₁₀-Alkylestern, Vinylchlorid, Vinylidenchlorid, Vinylidenfluorid, Tetrafluorethylen, Glycidylacrylat, Glycidylmethacrylat, Acrylaten und Methacrylaten von C₁-C₁₀-Alkoholen, Vinylaromaten, (Meth)acrylnitril, Maleinsäureanhydrid und α,β-ethylenisch ungesättigten Mono- und Dicarbonsäuren,
- Homo- und Copolymeren von Vinylacetalen,
- Polyvinylestern,
- Polycarbonaten,
- Polyestern,
- Polyethern,
- Polyetherketonen,
- thermoplastischen Polyurethanen,
- Polysulfiden,
- Polysulfonen,
- Polyethersulfonen,
- Cellulosealkylestern,
und Mischungen davon.

12. Formmasse nach Anspruch 11, wobei das thermoplastische Polymer ausgewählt ist unter Polyvinylchlorid (PVC), Polyvinylbutyral (PVB), Homo- und Copolymeren von Vinylacetat, Homo- und Copolymeren von Styrol, Polyacrylate, thermoplastischen Polyurethanen (TPU) oder Polysulfiden.

13. Formmasse nach einem der Ansprüche 11 oder 12, wobei es sich bei dem thermoplastischen Polymer um Polyvinylchlorid (PVC) handelt.

14. Formmasse nach Anspruch 13, wobei der Gehalt der Weichmacher-Zusammensetzung in der Formmasse 1,0 bis 300 phr beträgt.

15. Formmasse nach einem der Ansprüche 11 oder 12, enthaltend wenigstens ein von Polyvinylchlorid verschiedenes thermoplastisches Polymer, wobei der Gehalt der Weichmacher-Zusammensetzung in der Formmasse 0,5 bis 300 phr beträgt.

16. Formmasse nach Anspruch 10, wobei es sich bei dem Polymer um ein Elastomer handelt, bevorzugt ausgewählt unter natürlichen Kautschuken, synthetischen Kautschuken und Mischungen davon.

17. Formmasse nach Anspruch 16, wobei der Gehalt der Weichmacher-Zusammensetzung in der Formmasse 1,0 bis 60 phr beträgt.

18. Verwendung einer Weichmacher-Zusammensetzung, wie in einem der Ansprüche 1 bis 9 definiert, als Weichmacher für thermoplastische Polymere und Elastomere.

19. Verwendung einer Weichmacher-Zusammensetzung, wie in einem der Ansprüche 1 bis 9 definiert, als Weichmacher in einem Plastisol.

20. Verwendung einer Formmasse, wie in einem der Ansprüche 10 bis 17 definiert, zur Herstellung von Formkörpern und Folien, wie beispielsweise Gehäusen von Elektrogeräten, Computergehäusen, Werkzeugen, Rohrleitungen, Kabeln, Schläuchen, Draht-Ummantelungen, Fensterprofilen, Komponenten für den Fahrzeugbau, Reifen, Möbeln, Schaumstoff für Polster und Matratzen, Planen, Dichtungen, Verbundfolien, Schallplatten, Kunstleder, Verpackungsbehältern, Klebebandfolien oder Beschichtungen.

21. Verwendung einer Formmasse, wie in einem der Ansprüche 10 bis 17 definiert, zur Herstellung von Formkörpern und Folien, die direkt mit Menschen oder Nahrungsmitteln in Kontakt kommen.

22. Verwendung wie in Anspruch 21 definiert, wobei es sich bei den Formkörpern und Folien, die direkt mit Menschen oder Nahrungsmitteln in Kontakt kommen, um Medizinprodukte, Hygieneprodukte, Lebensmittelverpackungen, Produkte für den Innenraumbereich, Spielzeuge und Kinderpflegeartikel, Sport- und Freizeitprodukte, Bekleidung oder Fasern für Gewebe handelt.

## Claims

1. A plasticizer composition comprising
a) at least one compound of the general formula (I),
R¹-O-C(=O)-X-C(=O)-O-R² (I)
in which
X is an unbranched or branched C₂-C₈ alkylene group or an unbranched or branched C₂-C₈ alkenylene group, comprising at least one double bond
and
R¹ and R² independently at each occurrence are selected from C₃-C₅ alkyl,
b) at least one compound of the general formula (II), 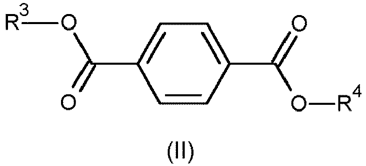 in which
R³ and R⁴ independently of one another are selected from branched and unbranched C₄-C₁₂ alkyl radicals.

2. The plasticizer composition according to claim 1, in the compounds of the general formula (I), X being an unbranched C₂-C₅ alkylene group.

3. The plasticizer composition according to claims 1 and 2, R¹ and R² in the compounds of the general formula (I) independently at each occurrence being n-butyl, isobutyl, n-pentyl, 2-methylbutyl or 3-methylbutyl.

4. The plasticizer composition according to any of the preceding claims, R¹ and R² in the compounds of the general formula (I) both being n-butyl.

5. The plasticizer composition according to any of the preceding claims, R³ and R⁴ in the compounds of the general formula (II) both being 2-ethylhexyl, both being isononyl or both being 2-propylheptyl.

6. The plasticizer composition according to any of the preceding claims, the plasticizer composition optionally comprising a further plasticizer which is different from the compounds (I) and (II) and which is selected from phthalic dialkyl esters, phthalic alkylaryl esters, cyclohexane-1,2-dicarboxylic esters, cyclohexane-1,4-dicarboxylic esters, trimellitic trialkyl esters, benzoic alkyl esters, dibenzoic esters of glycols, hydroxybenzoic esters, esters of saturated monocarboxylic acids, esters of saturated dicarboxylic acids other than compounds (I), esters of unsaturated dicarboxylic acids other than compounds (I), amides and esters of aromatic sulfonic acids, alkylsulfonic esters, glycerol esters, isosorbide esters, phosphoric esters, citric triesters, alkylpyrrolidone derivatives, 2,5-furandicarboxylic esters, 2,5-tetrahydrofurandicarboxylic esters, epoxidized vegetable oils, epoxidized fatty acid monoalkyl esters, and polyesters of aliphatic and/or aromatic polycarboxylic acids with at least dihydric alcohols.

7. The plasticizer composition according to any of the preceding claims, the amount of compounds of the general formula (I) in the plasticizer composition being 1 to 70 wt%.

8. The plasticizer composition according to any of the preceding claims, the amount of compounds of the general formula (II) in the plasticizer composition being 30 to 99 wt%.

9. The plasticizer composition according to any of the preceding claims, wherein the weight ratio between compounds of the general formula (I) and compounds of the general formula (II) is in the range from 1 : 100 to 2 : 1.

10. A molding composition comprising at least one polymer and a plasticizer composition as defined in any of claims 1 to 9.

11. The molding composition according to claim 10, wherein the polymer is a thermoplastic polymer selected from
- homopolymers or copolymers comprising in copolymerized form at least one monomer selected from C₂-C₁₀ monoolefins, 1,3-butadiene, 2-chloro-1,3-butadiene, vinyl alcohol and its C₂-C₁₀ alkyl esters, vinyl chloride, vinylidene chloride, vinylidene fluoride, tetrafluoroethylene, glycidyl acrylate, glycidyl methacrylate, acrylates and methacrylates of C₁-C₁₀ alcohols, vinylaromatics, (meth)acrylonitrile, maleic anhydride, and α,β-ethylenically unsaturated monocarboxylic and dicarboxylic acids,
- homopolymers and copolymers of vinyl acetals,
- polyvinyl esters,
- polycarbonates,
- polyesters,
- polyethers,
- polyetherketones,
- thermoplastic polyurethanes,
- polysulfides,
- polysulfones,
- polyethersulfones,
- cellulose alkyl esters,
and mixtures thereof.

12. The molding composition according to claim 11, the thermoplastic polymer being selected from polyvinyl chloride (PVC), polyvinyl butyral (PVB), homopolymers and copolymers of vinyl acetate, homopolymers and copolymers of styrene, polyacrylates, thermoplastic polyurethanes (TPU), or polysulfides.

13. The molding composition according to either of claims 11 and 12, wherein the thermoplastic polymer is polyvinyl chloride (PVC).

14. The molding composition according to claim 13, the amount of the plasticizer composition in the molding composition being 1.0 to 300 phr.

15. The molding composition according to either of claims 11 and 12, comprising at least one thermoplastic polymer other than polyvinyl chloride, the amount of the plasticizer composition in the molding composition being 0.5 to 300 phr.

16. The molding composition according to claim 10, wherein the polymer is an elastomer, preferably selected from natural rubbers, synthetic rubbers, and mixtures thereof.

17. The molding composition according to claim 16, the amount of the plasticizer composition in the molding composition being 1.0 to 60 phr.

18. The use of a plasticizer composition as defined in any of claims 1 to 9 as plasticizer for thermoplastic polymers and elastomers.

19. The use of a plasticizer composition as defined in any of claims 1 to 9 as plasticizer in a plastisol.

20. The use of a molding composition as defined in any of claims 10 to 17 for producing moldings and foils, as for example housings of electrical devices, computer housings, tooling, piping, cables, hoses, wire sheathing, window profiles, vehicle-construction components, tires, furniture, cushion foam and mattress foam, tarpaulins, gaskets, composite foils, recording disks, synthetic leather, packaging containers, adhesive-tape foils, or coatings.

21. The use of a molding composition as defined in any of claims 10 to 17 for producing moldings and foils which come directly into contact with people or with foods.

22. The use as defined in claim 21, wherein the moldings and foils which come directly into contact with humans or foods are medical products, hygiene products, packaging for food or drink, products for the interior sector, toys and child-care items, sports-and-leisure products, apparel, or fibers for textiles.

## Revendications

1. Composition de plastifiant, contenant
a) au moins un composé de formule générale (I),
R¹-O-C(=O)-X-C(=O)-O-R² (I)
dans laquelle
X représente un groupe alkylène en C₂-C₈ ramifié ou non ramifié ou un groupe alcénylène en C₂-C₈ ramifié ou non ramifié, contenant au moins une double liaison,
et
R¹ et R² sont choisis, indépendamment l'un de l'autre, parmi des groupes alkyle en C₃-C₅,
b) au moins un composé de formule générale (II), 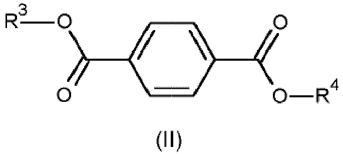 dans laquelle
R³ et R⁴ sont choisis indépendamment l'un de l'autre parmi des radicaux alkyle en C₄-C₁₂ ramifiés ou non ramifiés.

2. Composition de plastifiant selon la revendication 1, dans laquelle dans les composés de formule générale (I) X représente un groupe alkylène en C₂-C₅ non ramifié.

3. Composition de plastifiant selon l'une quelconque des revendications 1 et 2, dans laquelle dans les composés de formule générale (I) R¹ et R² représentent indépendamment l'un de l'autre un groupe n-butyle, isobutyle, n-pentyle, 2-méthylbutyle ou 3-méthylbutyle.

4. Composition de plastifiant selon l'une quelconque des revendications précédentes, dans laquelle dans les composés de formule générale (I) R¹ et R² représentent l'un et l'autre un groupe n-butyle.

5. Composition de plastifiant selon l'une quelconque des revendications précédentes, dans laquelle dans les composés de formule générale (II) R³ et R⁴ représentent l'un et l'autre un groupe 2-éthylhexyle, l'un et l'autre un groupe isononyle ou l'un et l'autre un groupe 2-propylheptyle.

6. Composition de plastifiant selon l'une quelconque des revendications précédentes, dans laquelle la composition de plastifiant contient éventuellement un autre plastifiant différent des composés (I) et (II), qui est choisi parmi des phtalates de dialkyle, phtalates d'alkylaryle, esters d'acide cyclohexane-1,2-dicarboxylique, esters d'acide cyclohexane-1,4-dicarboxylique, trimellitates de trialkyle, benzoates d'alkyle, dibenzoates de glycols, esters d'acide hydroxybenzoïque, esters d'acides monocarboxyliques saturés, esters d'acides dicarboxyliques saturés différents des composés (I), esters d'acides dicarboxyliques insaturés différents des composés (I), amides et esters d'acides sulfoniques aromatiques, esters d'acides alkylsulfoniques, esters de glycérol, esters d'isosorbide, esters d'acide phosphorique, triesters d'acide citrique, dérivés d'alkylpyrrolidones, esters d'acide 2,5-furanedicarboxylique, esters d'acide 2,5-tétrahydrofuranedicarboxylique, huiles végétales époxydées, esters monoalkyliques d'acides gras époxydés, polyesters d'acides polycarboxyliques aliphatiques et/ou aromatiques avec des alcools au moins dihydriques.

7. Composition de plastifiant selon l'une quelconque des revendications précédentes, dans laquelle la teneur en composés de formule générale (I) de la composition de plastifiant vaut de 1 à 70 % en poids.

8. Composition de plastifiant selon l'une quelconque des revendications précédentes, dans laquelle la teneur en composés de formule générale (II) de la composition de plastifiant vaut de 30 à 99 % en poids.

9. Composition de plastifiant selon l'une quelconque des revendications précédentes, dans laquelle le rapport pondéral entre les composés de formule générale (I) et les composés de formule générale (II) se situe dans la plage de 1 : 100 à 2 : 1.

10. Matière à mouler, contenant au moins un polymère et une composition de plastifiant telle que définie dans l'une quelconque des revendications 1 à 9.

11. Matière à mouler selon la revendication 10, dans laquelle pour ce qui est du polymère il s'agit d'un polymère thermoplastique qui est choisi parmi
- des homopolymères ou copolymères qui contiennent au moins un monomère incorporé par polymérisation, qui est choisi parmi les mono-oléfines en C₂-C₁₀, le 1,3-butadiène, le 2-chloro-1,3-butadiène, l'alcool vinylique et ses esters d'alkyle en C₂-C₁₀, le chlorure de vinyle, le chlorure de vinylidène, le fluorure de vinylidène, le tétrafluoroéthylène, l'acrylate de glycidyle, le méthacrylate de glycidyle, les acrylates et méthacrylates d'alcools en C₁-C₁₀, les composés vinylaromatiques, le (méth)acrylonitrile, l'anhydride maléique et les acides mono- et dicarboxyliques à insaturation α,β-éthylénique,
- des homopolymères et copolymères de vinylacétals,
- des poly(ester vinylique)s,
- des polycarbonates,
- des polyesters,
- des polyéthers,
- des polyéthercétones,
- des polyuréthanes thermoplastiques,
- des polysulfures,
- des polysulfones,
- des polyéthersulfones,
- des esters alkyliques de cellulose,
et des mélanges de ceux-ci.

12. Matière à mouler selon la revendication 11, dans laquelle le polymère thermoplastique est choisi parmi le poly(chlorure de vinyle) (PVC), le polyvinylbutyral (PVB), des homopolymères et copolymères d'acétate de vinyle, des homopolymères et copolymères de styrène, des polyacrylates, des polyuréthanes thermoplastiques (TPU) ou des polysulfures.

13. Matière à mouler selon l'une quelconque des revendications 11 et 12, dans laquelle pour ce qui est du polymère thermoplastique il s'agit du poly(chlorure de vinyle) (PVC).

14. Matière à mouler selon la revendication 13, dans laquelle la teneur en la composition de plastifiant de la matière à mouler vaut de 1,0 à 300 phr.

15. Matière à mouler selon l'une quelconque des revendications 11 et 12, contenant au moins un polymère thermoplastique différent du poly(chlorure de vinyle), la teneur en la composition de plastifiant de la matière à mouler valant de 0,5 à 300 phr.

16. Matière à mouler selon la revendication 10, dans laquelle pour ce qui est du polymère il s'agit d'un élastomère, de préférence choisi parmi les caoutchoucs naturels, les caoutchoucs synthétiques et des mélanges de ceux-ci.

17. Matière à mouler selon la revendication 16, dans laquelle la teneur en la composition de plastifiant de la matière à mouler vaut de 1,0 à 60 phr.

18. Utilisation d'une composition de plastifiant telle que définie dans l'une quelconque des revendications 1 à 9, en tant que plastifiant pour des élastomères et polymères thermoplastiques.

19. Utilisation d'une composition de plastifiant telle que définie dans l'une quelconque des revendications 1 à 9, en tant que plastifiant dans un plastisol.

20. Utilisation d'une matière à mouler telle que définie dans l'une quelconque des revendications 10 à 17, pour la production de corps moulés et de films, comme par exemple des boîtiers d'appareils électriques, des coques d'ordinateurs, des outils, des conduites tubulaires, des câbles, des tuyaux souples, des gaines de fils métalliques, des profilés de fenêtres, des composants pour la construction de véhicules, des pneumatiques, des meubles, une mousse pour coussins et matelas, des bâches, des joints d'étanchéité, des films composites, des disques, le cuir artificiel, des contenants d'emballage, des films de rubans adhésifs ou des revêtements.

21. Utilisation d'une matière à mouler telle que définie dans l'une quelconque des revendications 10 à 17, pour la production de corps moulés et de films, qui entrent directement en contact avec des êtres humains ou des denrées alimentaires.

22. Utilisation telle que définie dans la revendication 21, dans laquelle pour ce qui est des corps moulés et films qui entrent directement en contact avec des êtres humains ou des denrées alimentaires, il s'agit de produits médicaux, de produits d'hygiène, d'emballages de produits alimentaires, de produits pour l'espace intérieur, de jouets et d'articles de puériculture, de produits pour le sport et les loisirs, de vêtements ou de fibres pour tissus.
